# EUROPEAN PATENT APPLICATION

(11) **EP 1 351 175 A1**
(43) Date of publication of application: **08.10.2003**
(21) Application number: 01976865.4
(22) Date of filing: 29.10.2001
(51) Int. Cl.: G06F 17/60

(54) **BUSINESS IMPROVEMENT SUPPORTING SYSTEM AND METHOD THEREFOR**

(30) Priority: 05.01.2001 JP 2001000650
(71) Applicant: Utsumi, Yasufumi, Urayasu-shi, Chiba 279-0011 (JP)
(72) Inventor: Utsumi, Yasufumi, Urayasu-shi, Chiba 279-0011 (JP)
(74) Representative: Beresford, Keith Denis Lewis
(86) International application number: JP0109487
(87) International publication number: WO02056224

(57) **Abstract**

A task improvement support system and a method therefor are provided which can design an accurate strategy and, at the same time, analyze data and improve a task. In a strategy formulator, components of a task, options which each component can take, a performance index of the task, a relational expression of a combination of the options and the performance index are defined and set in a strategy database (107). A task improvement support system (100) collects knowledge concerning the set task and prepares a strategy with a high performance index. Each strategy executor selects and executes a strategy and inputs an execution results. The task improvement support system (100) compiles execution results and analyzes a correlation of options with which an index of performance increases. As a result of the compilation and the analysis of correlation, the task improvement support system (100) accumulates information on a high priority strategy as new knowledge.

## Description

### TECHNICAL FIELD

The present invention relates to a task improvement support system and a method therefor which design a strategy concerning a sales task, a purchase task, a manufacturing task, research and development, an indirect task, general affairs, an employment task, an education task, an investment task, and other tasks for a business agency, a manufacturer, a business corporation, a financial institution, a retailer, and the other business entities of goods or services and analyze an execution result of the strategy.

### BACKGROUND ART

In decision of a strategy used in conventional task improvement, an individual strategy executor discusses a strategy and a performance target thereof for a period until the next decision of a strategy with a superior of the executor and sets the strategy and the performance target annually or semiannually. However, since there is no consistent support for circulating a cycle of decision, implementation, and result analysis of a strategy, and decision of the next strategy for increasing performance with an information system, and a large amount of cost is required, a period for one round of this cycle cannot but become as long as one year or half year. In addition, useful information for deciding a strategy such as results of implementation of a similar strategy by other strategy executors is not shared. Therefore, a strategy to be formulated anew is a rehash of a strategy of the previous period, or a target with little grounds and specific strategies such as increase of 15% compared with the previous period tends to be set.

A formulated strategy is written on paper or registered in information system. After the strategy is formulated, a strategy executor makes the formulated strategy concrete and executes the strategy according to judgment of his/her own until timing for the next strategy decision. During that period, a superior has a meeting in a form of interview and performs progress check of a strategy being executed and provision of an advice. However, it is difficult to acquire various kinds of data and information for giving an advice for a method of executing a better strategy and, actually, only simple progress check is performed or provision of an advice based only on an experience of the superior himself/herself is performed.

For analysis of an execution result of a strategy, a formulator or an executor of the strategy can refer to an achievement value concerning a performance index of a company or an organization which is set for performance management of the company, but has to independently collect an achievement value of a performance index concerning an individual strategy in which the formulator or the executor of the strategy has been involved and information concerning a result analysis of the achievement value, and carry out analysis. However, an amount of information which an individual can acquire and cost and time which the individual can spend are limited, and it is difficult to scientifically analyze an execution result according to his/her own needs. In addition, knowledge obtained by execution of the strategy is only accumulated as tacit knowledge of the individual but is never analyzed scientifically and shared and is not utilized as useful information for formulation of other strategies or at the time when the executor formulates and executes the next strategy.

Thereafter, each strategy executor reviews performance for the period in a discussion with a superior and sets a strategy and a performance target for the next period. However, since useful information such as information on a strategy with higher performance carried out by other employees is not shared and utilized across an organization, a learning effect for a company as a whole is limited. For the sharing of knowledge concerning formulation, implementation, and result analysis of a strategy, and formulation of the next strategy exceeding a range of closed sphere of a superior and a subordinate, it is necessary to hold a meeting in a form of interview many times. Therefore, in a present situation, it is physically difficult to share knowledge throughout a company which is constituted by a large number of people and a large number of organizations.

In recent years, among the series of processing concerning task improvement, there are a budget formulation support system or a data mining system for the strategy formulation, a progress management system of an individual strategy item for the execution of a strategy, a budget achievement management system for the result analysis of a strategy, and a knowledge management system for the sharing of knowledge.

However, the budget formulation support system and the budget achievement support system are systems for managing a budget for an entire company budget, and it is practically difficult in terms of management cost to manage a strategy of an individual person in a small lot with high frequency of change from the viewpoint of the entire company. In addition, a purpose of these systems is reduction of time for budget preparation and achievement report and is not task improvement. Although data mining is information technology mainly used for sales task improvement, sufficient data and statistic analysis skill are preconditions for the data mining, and few companies satisfy these preconditions. Even if the preconditions are satisfied, although an analysis of "who tends to buy which product frequently" is possible, this is not sufficient for recommending a concrete strategy including even a method of selling.

Moreover, the progress management system manages a state of progress of a strategy item of an individual person but does not have a function of managing a strategy by a unit of organization or company in which items are classified into groups. In addition, the progress management does not have an organic association with the strategy formulation, the result analysis and the formulation of the next strategy. Moreover, the progress management system does not have both a function of managing progress of a policy item of an individual person and a function of retrieving strategy executors who are executing the same strategy and compare them, and cannot perform navigation (instruction) for execution of a more appropriate strategy through knowledge sharing.

In addition, a mechanism of conventional knowledge management is limited to provision of a place for introducing an implemented strategy with high performance or a place for sharing other inputted information on an information system, so-called information sharing. Further, a strategy formulator and an executor must personally retrieve information serving as a reference from a database and process the information such that the information is useful for a strategy of their own. Consequently, since labor and time are required for acquiring information useful for formulation and execution of a strategy of their own, the mechanism is not utilized so often actually.

The present invention has been devised in order to solve the above-described problems, and it is an object of the present invention to provide a task improvement support system and a method therefor which, by changing tacit knowledge of individual strategy formulators and executors into formalized knowledge to be shared in an entire company and utilizing the shared knowledge, can recommend a strategy with high performance to the individual strategy formulators and executors and manage and support execution of the recommended strategy with an ordinary information system even if there is not abundant information required for recommendation of a strategy.

In addition, it is another object of the present invention to provide a task improvement system and a method therefor which, by sharing and providing information useful for formulation of a strategy and confirmation of an execution state at any time and standardizing and automating result analysis, can organically associating formulation, implementation, and result analysis of a strategy, and formulation of the next strategy, reduce cost in the series of operations, and bring about improvement of quality.

Further, it is another object of the present invention to reduce cost in the series of operations, thereby significantly reducing time for one round of a cycle of the formulation, implementation, and result analysis of a strategy, and formulation of the next strategy, and circulating the cycle many times in a period of conventional one cycle to significantly improve a learning effect.

Moreover, it is yet another object of the present invention to provide a task improvement system and a method therefor which, by providing a knowledge collection center exceeding knowledge sharing in one company, can share only knowledge in industries of different types and industries of different categories without a capital relation among which it is difficult to share customer information, and formulate and execute a strategy with higher performance.

### DISCLOSURE OF THE INVENTION

In a first aspect of the present invention, a task improvement support system in accordance with the present invention is a task improvement support system for supporting task improvement based upon execution of a strategy for a task, which includes: component storage means having stored therein a plurality of components constituting the task and options which the respective components can take; input means for inputting a plurality of strategies consisting of combinations of the options stored in the component storage means; acceptance means for accepting selection of at least one of the strategies inputted by the input means; actual measured value receiving means for receiving an actual measured value of a performance index indicating performance for the strategy for which selection is accepted by the acceptance means; and performance index calculation means for finding the performance index for the respective strategies inputted by the input means using the actual measured value of the performance index received by the actual measured value receiving means.

Here, the task improvement support system can further include: list preparation means for preparing a list, in which the strategies inputted by said input means are arranged, in accordance with the performance index found by the performance index calculation means; and list transmission means for sending the list prepared by the list preparation means.

Here, the task improvement support system can further include determination means for determining a strategy, for which execution should be recommended, among the strategies inputted by the input means based upon the performance index found by the performance index calculation means.

Here, the strategy for which execution should be recommended can be a strategy for which the performance index found by the performance index calculation means exceeds a predetermined threshold value.

Here, the task improvement support system can further include strategy preparation means for combining the options stored in the component storage means to prepare a new strategy, for which execution should be recommended, based upon the actual measured value of the performance index received by the actual measured value receiving means, in which the performance index calculation means further finds a performance index of the strategy prepared by the strategy preparation means.

Here, the task improvement support system can further include knowledge collection means for collecting knowledge indicating a relation between the strategy and the performance index from the outside, in which the performance index calculation means finds the performance index further using the knowledge collected by the knowledge collection means.

Here, the strategy for which execution should be recommended can be a strategy for which the performance index exceeds a predetermined threshold value.

Here, the strategy preparation means can find the strategy for which execution should be recommended according to statistic analysis with the performance index as an explained variable and the options of the component as an explanatory variable.

Here, the acceptance means can include: strategy transmission means for sending the strategy inputted by the input means, the strategy prepared by the strategy preparation means, and the performance index found by the performance index calculation means to an outside information processing apparatus; and strategy acceptance means for accepting selection of at least one strategy which should be executed by the executor of the strategy out of the strategies sent by the strategy transmission means.

Here, the task improvement support system can further include change acceptance means for accepting change of the options constituting the strategy prepared by the strategy preparation means, in which the performance index calculation means further finds a performance index of a strategy consisting of the options for which change is accepted by the change acceptance means.

Here, the task improvement support system can further include knowledge collection means for collecting knowledge indicating a relation between the strategy and the performance index from the outside, in which the performance index calculation means finds the performance index using the knowledge collected by the knowledge collection means.

Here, the task improvement support system can further include actual measured value transmission means for sending an actual measured value of the performance index of the strategy received by the actual measured value receiving means in response to a request received from the outside.

Here, the task improvement support system can further include: strategy target information storage means in which information on targets for whom the strategy should be executed is stored; and means for sending the information on the targets stored in the strategy target information storage means and accepting designation of a target for whom the strategy should be executed out of the sent targets.

Here, the acceptance means can include: strategy transmission means for sending the strategy inputted by the input means to an outside information processing apparatus; and strategy acceptance means for accepting selection of at least one strategy which the executor of the strategy should execute out of the strategies sent by the strategy transmission means.

Here, the task can include any one of a sales task, a purchase task, a manufacturing task, research and development, an indirect task, general affairs, an employment task, an education task, and an investment task.

Here, the task is the sales task, and the component can include a component indicating to whom a product is sold, what kind of product is sold, and how a product is sold.

In a second aspect of the present invention, an information processing apparatus in accordance with the present invention is an information processing apparatus for performing communication with the task improvement support system in accordance with the present invention through a network, which includes: means for receiving strategies sent by the strategy transmission means; means for selecting at least one strategy which should be executed by a strategy executor out of strategies included in the strategies received by the receiving means; and means for sending the strategy selected by the selecting means to the strategy acceptance means.

Here, the information processing apparatus can further include means for sending an actual measured value of a performance index of the strategy selected by the selecting means to the task support system.

In a third aspect of the present invention, a task improvement support method in accordance with the present invention is a task improvement support method using a system for supporting task improvement based upon execution of a strategy for a task, which includes: storing a plurality of components constituting the task and options which the respective components can take in component storage means; inputting a plurality of strategies consisting of combinations of the options stored in the component storage means; accepting selection of at least one of the inputted strategies; receiving an actual measured value of a performance index indicating performance for the strategy for which selection is accepted; and finding the performance index for the inputted strategies based upon the received actual measured value of the performance index.

Here, the task improvement support method can include: preparing a list, in which the inputted strategies are arranged, in accordance with the found performance index; and sending the prepared list.

Here, the task improvement support method can further include determining a strategy for which execution should be recommended out of the inputted strategies based upon the found performance index.

Here, the strategy for which execution should be recommended can be a strategy for which the found performance index exceeds a predetermined threshold value.

Here, the task improvement support method can further include combining the options stored in the component storage means to prepare a new strategy, for which execution should be recommended, based upon the received actual measured value of the received performance index, and find a performance index of the prepared strategy.

Here, the task improvement support method can further include collecting knowledge indicating a relation between the strategy and the performance index from the outside to find the performance index using the collected knowledge.

Here, the strategy for which execution should be recommended can be a strategy for which the performance index exceeds a predetermined threshold value.

Here, the task improvement support system can prepare, in preparing the strategy, the strategy for which execution should be recommended according to statistic analysis with the performance index as an explained variable and the options of the component as an explanatory variable.

Here, the task improvement support system can send, in accepting selection of the strategy, the inputted strategy and the prepared strategy to an outside information processing apparatus and accepts selection of at least one strategy which should be executed by the executor of the strategy out of the sent strategies.

Here, the task improvement support method can further include accepting change of the options constituting the prepared strategy to find a performance index of a strategy consisting of the options for which change is accepted.

Here, the task improvement support method can further include collecting knowledge indicating a relation between the strategy and the performance index from the outside to find the performance index using the collected knowledge.

Here, the task improvement support method can further include sending an actual measured value of the performance index of the received strategy in response to a request received from the outside.

Here, the task improvement support system can send, in accepting selection of the strategy, the information on the targets for whom the strategy should be executed stored in the strategy target information storage means and accepting designation of a target for whom the strategy should be executed out of the sent targets.

Here, the task improvement support method can further include: sending the inputted strategy to an outside information processing apparatus; and accepting selection of at least one strategy which the executor of the strategy should execute out of the sent strategies.

Here, the task can include any one of a sales task, a purchase task, a manufacturing task, research and development, an indirect task, general affairs, an employment task, an education task, and an investment task.

Here, the task is the sales task, and the component can include a component indicating to whom a product is sold, what kind of product is sold, and how a product is sold.

Here, the sent strategies can be received in an information processing apparatus for performing communication with the task improvement support system through a network, at least one strategy which should be executed by a strategy executor is selected out of strategies included in the received strategies in the information processing apparatus, and the selected strategy is sent to the task improvement support system in the information processing apparatus.

Here, the task improvement support method can further include sending an actual measured value of a performance index of the selected strategy from the information processing apparatus to the task improvement support system.

In a fourth aspect of the present invention, a computer readable recording medium in accordance with the present invention has recorded therein a computer program supporting task improvement based upon execution of a strategy for a task, which causes a computer to execute: a step of storing a plurality of components constituting the task and options which the respective components can take in component storage means; a step of inputting a plurality of strategies consisting of combinations of the options stored in the component storage means; a step of accepting selection of at least one of the inputted strategies; a step of receiving an actual measured value of a performance index indicating performance for the strategy for which selection is accepted; and a step of finding the performance index for the inputted strategy based upon the received actual measured value of the performance index.

### BRIEF DESCRIPTION OF THE DRAWINGS

FIG. 1 is a system diagram showing an example of a network system to which the present invention is applied;
FIG. 2 is a block diagram showing a hardware configuration of a computer system which is used as a server computer in accordance with one embodiment of the present invention;
FIG. 3 is a flow diagram showing procedures of a task improvement support method in accordance with one embodiment of the present invention;
FIG. 4A illustrates an example of a frame of task components of a task, the task components, and options (factors) which the respective task components can take;
FIG. 4B illustrates an example of purposes of a strategy for a task;
FIG. 5 illustrates an example of a screen which is displayed on a display of a client computer;
FIG. 6 illustrates an example of the screen which is displayed on the display of the client computer;
FIG. 7 illustrates an example of the screen which is displayed on the display of the client computer;
FIG. 8 illustrates an example of the screen which is displayed on the display of the client computer;
FIG. 9 illustrates an example of the screen which is displayed on the display of the client computer;
FIG. 10 illustrates an example of the screen which is displayed on the display of the client computer;
FIG. 11 illustrates an example of the screen which is displayed on the display of the client computer;
FIG. 12 illustrates an example of the screen which is displayed on the display of the client computer;
FIG. 13 illustrates a relation between FIGS. 13A and 13B;
FIG. 13A illustrates an example of the screen which is displayed on the display of the client computer;
FIG. 13B illustrates an example of the screen which is displayed on the display of the client computer;
FIG. 14 is a system diagram showing a basic structure of a network system in accordance with the present invention;
FIG. 15 is a block diagram showing a basic hardware configuration of a seller client which is used in a system of the present invention;
FIG. 16 is a block diagram showing a structure of a network system in accordance with an embodiment of the present invention;
FIG. 17 illustrates a flow of basic processing in accordance with one embodiment of the present invention;
FIG. 18 illustrates a relation among FIGS. 18A, 18B, and 18C;
FIG. 18A is a conceptual diagram showing an overall picture of a flow of processing in a network system in accordance with one embodiment of the present invention;
FIG. 18B is a conceptual diagram showing an overall picture of a flow of processing in the network system in accordance with one embodiment of the present invention;
FIG. 18C is a conceptual diagram showing an overall picture of a flow of processing in the network system in accordance with one embodiment of the present invention;
FIG. 19 illustrates a relation among FIGS. 19A, 19B, and 19C;
FIG. 19A illustrates data processing according to a sales strategy design unit in accordance with one embodiment of the present invention;
FIG. 19B illustrates the data processing according to the sales strategy design unit in accordance with one embodiment of the present invention;
FIG. 19C illustrates the data processing according to the sales strategy design unit in accordance with one embodiment of the present invention;
FIG. 20 illustrates procedures of processing in accordance with one embodiment of the present invention;
FIG. 21 illustrates procedures of the processing in accordance with one embodiment of the present invention;
FIG. 22 illustrates procedures of the processing in accordance with one embodiment of the present invention;
FIG. 23 illustrates a relation between FIGS. 23A and 23B;
FIG. 23A illustrates procedures of processing in accordance with one embodiment of the present invention;
FIG. 23B illustrates procedures of the processing in accordance with one embodiment of the present invention;
FIG. 24 illustrates procedures of processing in accordance with one embodiment of the present invention;
FIG. 25 illustrates procedures of processing in accordance with one embodiment of the present invention;
FIG. 26 illustrates a relation between FIGS. 26A and 26B;
FIG. 26A illustrates procedures of processing in accordance with one embodiment of the present invention;
FIG. 26B illustrates procedures of the processing in accordance with one embodiment of the present invention;
FIG. 27 illustrates procedures of processing in accordance with one embodiment of the present invention;
FIG. 28 illustrates procedures of processing in accordance with one embodiment of the present invention;
FIG. 29 illustrates procedures of processing in accordance with one embodiment of the present invention;
FIG. 30 illustrates a relation among FIGS. 30A, 30B, and 30C;
FIG. 30A illustrates data processing according to a sales strategy design unit in accordance with one embodiment of the present invention;
FIG. 30B illustrates the data processing according to the sales strategy design unit in accordance with one embodiment of the present invention; and
FIG. 30C illustrates the data processing according to the sales strategy design unit in accordance with one embodiment of the present invention.

### BEST MODE FOR CARRYING OUT THE INVENTION

### (First embodiment)

A first embodiment of the present invention will be described with reference to the drawings. Note that, in the following description, a term "knowledge" refers to knowledge existing inside and outside an organization obtained from experiences in the past and to knowledge utilized in all spheres such as management. More specifically, a correlation among components of a strategy, technical knowledge concerning a relation between a strategy and a performance index, know-how, and the like, which individuals have obtained through experiences or investigations on business, are included in the knowledge.

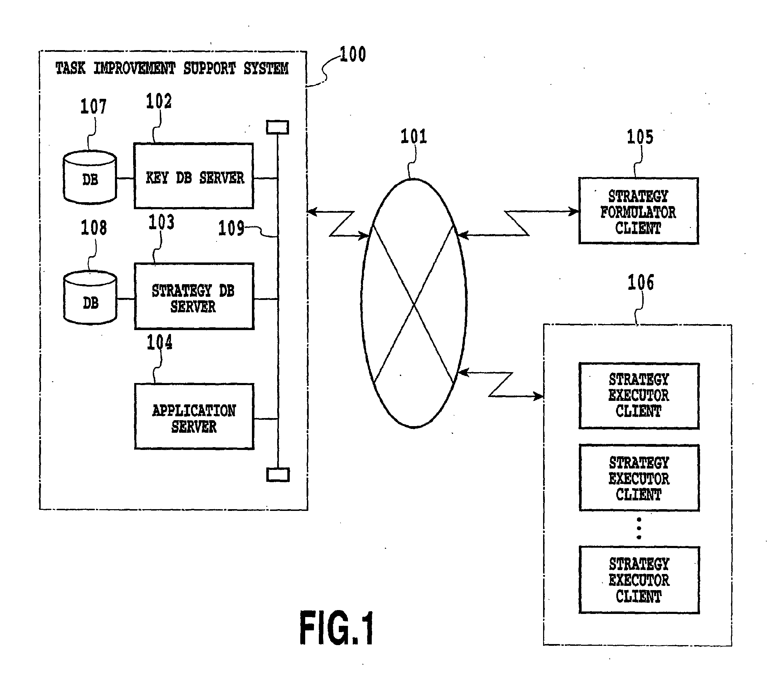

FIG. 1 is a diagram showing an example of a network system to which the present invention is applied. Note that a structure of the system in accordance with the present invention is represented by one shown in the basic system diagram of FIG. 1. However, this only shows an example, and the present invention is not limited to this.

The network system, to which the present invention is applied, is constituted by a task improvement support system 100, a strategy formulator client 105, and a strategy executor client 106. Among them, the task improvement support system 100 is constituted such that a key DB server 102, a strategy DB server 103, and an application server 104, which are connected via an LAN 109, are connected to the Internet 101 and can communicate with each other.

The key DB server 102 has a key database 107 storing knowledge concerning tasks and is a server computer managing this database. Customer data including an existing customer list and a potential customer list is further stored in the key database 107. For example, a person in charge of sales, a purchase item, a purchase history, and other various data are included in the customer data other than customer attributes such as name, address, telephone number, age, and sex of a customer are included in the customer data. This customer data may be inputted at the time of designing a strategy or may be inputted and stored in advance. Input of these customer data includes a form of reading and inputting data stored in an information storage medium or inputting data using a keyboard of the task improvement support system 100 other than a form of receiving data inputted in the strategy formulator client 105 or the strategy executor client 106 through the Internet 101.

In this way, the customer data is stored for each strategy executor, and update thereof is performed based upon data sent from each strategy executor client 106.

The strategy DB server 103 is a server computer which manages the strategy database 108 having stored therein a frame of components of a task (hereinafter referred to as "task components" in some cases), options which each component can take (hereinafter referred to as "factor" in some cases), an index for measuring performance of the task, and a relational expression of a combination of factors and an index of performance, and performs retrieval and extraction of the information.

For example, in the case in which a target task is sales of a product, components of the task can include elements described below other than a customer and the product.
(1) An element indicating based upon what kind of solicitation point a sales strategy is designed. For example, an element such as a combination of a type of effect for a customer and a price.
(2) An element indicating a customer and an access medium. For example, an element such as telephone, electronic mail, or the Internet.
(3) An element indicating in which period a sales strategy targeting a customer is implemented. For example, an element such as a product purchase motivation forming period or a media accessible period of the customer.
(4) An element indicating in which place a sales strategy targeting a customer is implemented. For example, an element such as a place where a customer accesses a medium, a shop, or a home of the customer.

Moreover, data for performance calculation for each designed strategy is stored in the key database 107. More specifically, the data may be data such as a strategy implementation unit cost on an access medium, proceeds by a unit of sales of goods or services, or a standard assumed profit before sales strategy implementation of goods or services.

As to a cost of a sales strategy, basic data for calculation of a cost is included such as a cost on one telephone call for one customer, a cost on one visit, a cost on printing and distribution of one brochure, or the like.

The application server 104 is a server computer comprehensively managing the entire task improvement support system 100, and collects information on a strategy or knowledge from a client computer to perform analysis or performs retrieval of the key database 107 or the strategy database 108, data recording to them, information provision to the client computer, and the like in response to a request from the client computer. The collection of information from the client computer performed by the application server 104 is performed by sending a text document written in a markup language such as HTML and displaying a Web page such as an input screen on the client computer.

The strategy formulator client 105 is a computer system which is used by a person who formulates a strategy for a task (strategy formulator) such as a planning department of a company or a base chief, and performs input of information on a strategy and transmission to the task improvement support system 100. The strategy executor client 106 is a computer which is used by a person who executes a formulated strategy (strategy executor) such as a person in charge of sales or a shop clerk, and performs selection processing of a strategy provided from the task improvement support system 100, input of an execution result of a selected strategy, and transmission to the task improvement support system 100.

The strategy formulator client 105 and the strategy executor client 106 are client computers which are provided with service from the task improvement support system 100 which is a group of server computers. For these client computers, a server computer, a personal computer, a workstation, a wireless communication terminal such as a cellular phone or a PHS, a portable information terminal such as a PDA incorporating functions of wireless communication terminal, a game machine, a dedicated terminal such as an Internet TV, a television conference system, and other various information processing apparatuses, all of which are equipped with well-known browser software for browsing an HTML document sent from the task improvement support system 100 in a form of a Web page, can be used.

In addition, as a large scale constitution, a client computer can be constituted by a database server or a storage device, an application server or a control device, and the like, a Web server, a mail server, an authentication server, or the like can be provided, if necessary, and safety can be secured by multiplying various servers, if necessary. Alternatively, a form of a distributed database or the like is taken, in which any one of or each of an authentication server, an application server, a database server, and the like may exist in separate places or may exist in an identical place. For example, an outside integrated center (knowledge center) for collecting knowledge of industries of different types and industries of different categories may be established to install the above-described group of servers in this knowledge center. Consequently, knowledge of other companies not having a capital relation and other channels can be put together without requiring disclosure of information peculiar to companies.

In a storage device such as an external storage device provided in the client computer, there is provided a database for storing data such as customer data of a person in charge of sales, who is a strategy executor, and customer attributes thereof and trade history in the past, and more specifically, distinction of existing customers and expected customers for a target product of a task, a sales strategy target, and the like.

A strategy executed everyday, an access result thereof, a task negotiation result, or the like is inputted in the client computer, whereby these pieces of information are updated.

By adopting the structure as described above, in the present invention, transmission and reception as well as accumulation of data become possible between the task improvement support system 100 and the strategy formulator client 105 or the strategy executor client 106, and it becomes possible to design and analyze various strategies for task improvement support.

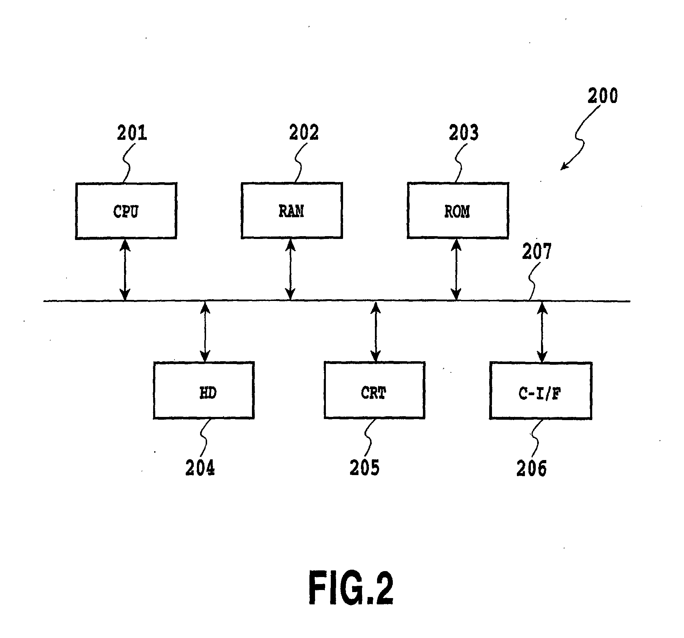

FIG. 2 is a block diagram showing an example of hardware configuration of a computer system used as a server computer in accordance with this embodiment.

As shown in the figure, a computer system 200 is constituted with a central processing unit (CPU) 201, a RAM 202 serving as a temporary storage area, a ROM 203 having programs and data stored therein, a hard disk (HD) 204 serving as an auxiliary storage device, a CRT 205 serving as a display device, and a communication interface (C-I/F) 206 such as a modem, which is used for making connection to the Internet 101, connected to a bus 207.

In the hard disk 204 and the ROM 203, programs for executing processing relating to the present invention and data such as information to be referred to by these programs are stored. Functions of the present invention described later are attained by the CPU 201, which is loaded with a computer program stored in the ROM 203, the hard disk 204, or the like constituting the computer system 200, executing an instruction based upon this program.

Note that the external hard disk 204 in this embodiment is an example of an auxiliary storage device, and it is also possible to use an internal hard disk or an external storage device such as a removable disk instead of this.

A document describing a Web page to be displayed on a client computer such as a PC and a CGI (Common Gateway Interface) script are included in this computer program other than a server application to be executed such that the key DB server 102, the strategy DB server 103, and the application server 104 function as WWW servers. Therefore, processing executed by the CGI script in the inside of the computer system 200 is also included in services provided by the respective server computers in this embodiment other than services for providing information of HTML or the like to a client with HTTP. Note that it is needless to mention that the provision of services using a Web page according to this embodiment is only an example, and the present invention can also be established by other system architectures.

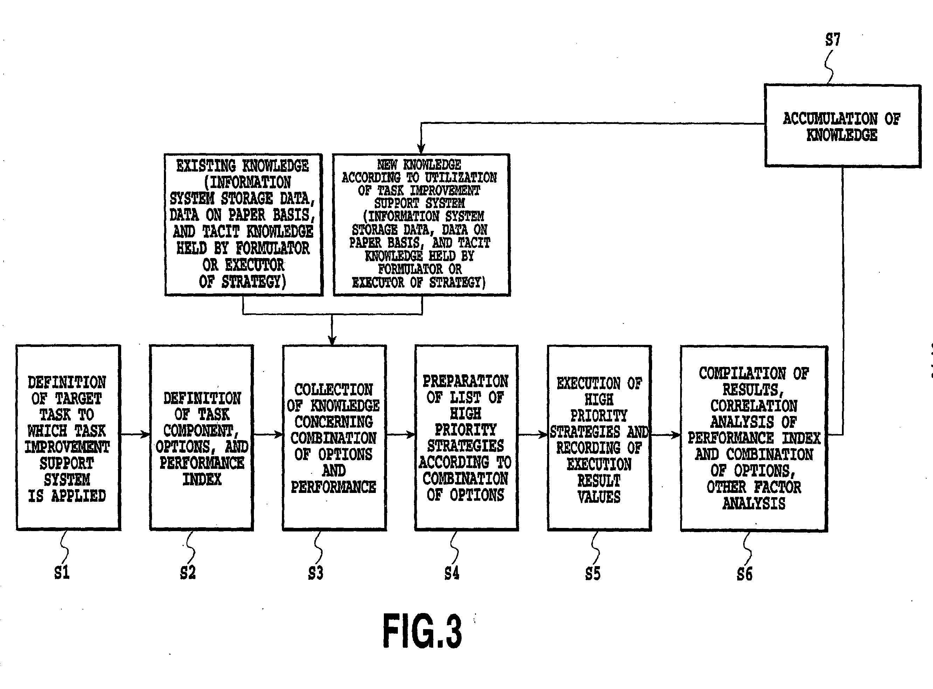

Next, procedures of the task improvement support method according to this embodiment will be described with reference to a flow diagram of FIG. 3.

First, in a strategy formulator, a range of tasks to be target of improvement is defined as, for example, "sales task of a specific product" (step S1).

Next, components of the defined task (task components), options (factors) which the respective components can take, an index for measuring performance of the task (performance index), and a relational expression of a combination of factors and indexes of performance are defined. Note that details of the task components defined here will be described later.

The strategy formulator who has performed such definitions accesses the application server 104 using the strategy formulator client 105. The application server 104 sends an HTML document in response to this access. Consequently, an input screen of a strategy is displayed on the display of the strategy formulator client 105. The strategy formulator inputs the defined task, a component frame thereof, the components, the factors, the performance index, and the relational expression on this input screen. The inputted information is sent to the strategy DB server 103 via the application server 104 and recorded in the strategy database 108 (step S2).

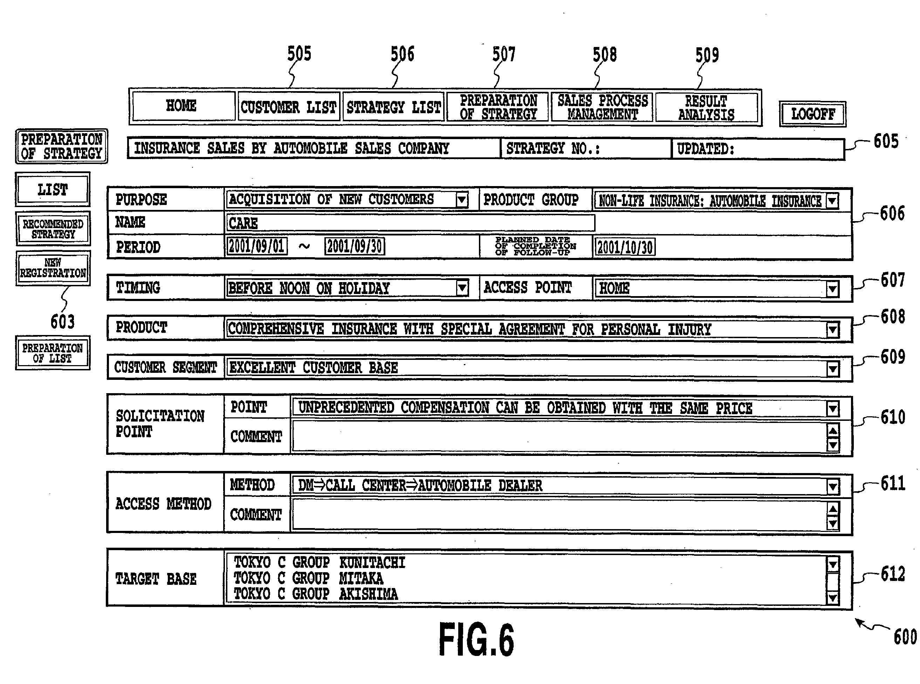

Note that these data are revised and updated appropriately, if necessary. In addition, details of the screen displayed on the strategy formulator client 105 in step S2 will be described later using FIG. 6.

Subsequently, in step S3, the application server 104 collects knowledge concerning the combinations of options and the performance set in the strategy DB server 103 from the strategy formulator client 105. The knowledge collected here includes information system storage data, data on a paper basis, and tacit knowledge held by the strategy formulator and the strategy executor. Specifically, the knowledge indicates a strategy consisting of a specific combination of the options stored in the component storage means and a relation of this strategy with the performance index, and includes, for example, correlation data among factors, a correlation of combinations of factors and performance, and the like.

More specifically, the following is included as knowledge.

### (1) Effective access methods are different by ages.

It is effective to approach customers in their thirties with an electronic mail and then from a call center.

It is effective to approach customers in their forties with a direct mail and then from a call center.

It is effective to approach customers in their fifties from a call center.

### (2) Effective access methods are different by customer segment.

It is effective to approach customers corresponding to an excellent customer base with a direct mail and then from a call center.

It is effective to approach customers corresponding to an ordinary customer base from a call center.

This collected information is accumulated and stored in the key database 107 of the key DB server 102 (step S3). In collecting knowledge, the application server 104 extracts from the strategy database 108 and provides the information relating to the strategy for the task, that is, the task described above, the component frame thereof, the component, the factors, the performance index, and the relational expression in response to a request from the strategy formulator client 105. Consequently, the strategy formulator can browse the information relating to the strategy for the task.

The strategy formulator inputs the information of the knowledge concerning the strategy for the task to the strategy formulator client 105 and sends the information to the application server 104. The application server 104 instructs the key DB server 102 to record the received knowledge in the key database 107. Here, in recording the factors, the key DB server 102 may classify the factors into groups to store them according to correlation data among the collected factors or a correlation of combinations of the factors.

Note that the processing of step S3 may be performed together with the processing of step S2. In this case, when the strategy formulator sends the task, the component frame thereof, the component, the factors, the performance index, and the relational expression to the application server 104, the strategy formulator also sends knowledge for a task consisting of a combination of specific factors.

Subsequently, the strategy formulator client 105 requests the application server 104 to download data to display a high priority strategy formulation screen. The application server 104 extracts existing knowledge from the key database 107 and extracts information relating to the task from the strategy database 108. Then, the application server 104 combines factors for each task component or an aggregate of factors classified into groups to automatically prepare a strategy for the task using the extracted information. In this case, the application server 104 finds an estimated value of a performance index of a target task for the prepared strategy. This estimated value of the performance index is a priority of the prepared strategy.

The application server 104 selects a strategy with a high estimated value of the performance index from the strategies which are formulated by the strategy formulator and for which the knowledge is inputted and the automatically prepared strategy. Then, the application server 104 prepares a list (high priority strategy list) in which information on the selected strategy is arranged in accordance with an estimated value of the performance index. This high priority strategy list is stored in the strategy database 108 in the form of an HTML document and, at the same time, sent to the strategy formulator client 105 (step S4).

Note that it is possible to shift from the processing of step S2 to the processing of step S4 without undergoing the collection of knowledge in step S3. In this case, the strategy formulator or the strategy executor combines the options defined in step S2 to prepare a plurality of strategies which are considered to have a high performance index based upon knowledge and experiences. Then, the prepared strategy is inputted to the task improvement support system 100 from the strategy formulator client 105 or the strategy executor client 106 through the Internet 101. The task improvement support system 100 prepares a high priority strategy list based upon the inputted strategy.

When the high priority strategy list is sent to the strategy formulator client 105, the application server 104 receives change of factors for the strategy included in the high priority strategy list from the strategy formulator. Then, the application server 104 prepares a new changed strategy using the received information, performs simulation based upon the collected knowledge, and finds an estimated value of a performance index of the changed strategy. By performing such processing, the estimated value can be served for reference when the strategy formulator plans a new strategy.

In step S5, each strategy executor selects a strategy and executes it. First, each strategy executor accesses the application server 104 using the strategy executor client 106. The application server 104 prepares a high priority strategy list according to the same processing as described in step S4, and sends this list to the strategy executor client 106 in the form of an HTML document. Alternatively, in the case in which a corresponding high priority strategy list is already stored in the strategy database 108, the application server 104 extracts this list from the strategy database 108 and sends it to the strategy executor client 106. The strategy executor client 106 displays the high priority strategy list on the display based upon the HTML document sent from the application server 104.

Here, the strategy executor operates a mouse or the like of the strategy executor client 106 to select one or more desired strategies from the displayed high priority strategy list. In the case in which a strategy is a sales task of a product, the application server 104 extracts from the key database 107 information on customers who can be targets of the strategy out of customers for whom the strategy executor is responsible. Then, the application server 104 prepares a list of target customers of the strategy based upon the extracted information and sends the list, and displays the list on the display of the strategy executor client 106. Moreover, the application server 104 accepts designation of customers for whom the strategy should be executed and selection of at least one strategy which should be executed for each customer.

After accepting the selection of a strategy for each customer from the user via this screen, the application server 104 stores an identification number of the designated strategy and the customer in the key database 107 associating them with each other. Consequently, the strategy which the strategy executor should execute is registered in the task improvement support system 100.

Note that, in place of the strategy executor such as a person in charge of sales, the strategy formulator may be able to perform the processing for selecting a strategy, which is executed by the person in charge of sales, from the high priority strategy list.

The strategy executor performs a task of his/her own based upon the selected strategy. Then, the strategy executor inputs an actual measured value of a performance index of the task (a progress state and an execution result such as effective conversation with a customer or agreement) for each executed strategy. The inputted information is sent to the key DB server 102 and the strategy DB server 103 from the strategy executor client 106 via the application server 104, and stored in the key database 107 and the strategy database 108.

The execution result and the progress state of the strategy to be stored here can be referred to by accessing the application server 104 from the strategy formulator client 105 or the strategy executor client 106. In this case, in response to a reference request from each client computer, the application server 104 extracts an actual measured value of a performance index and a progress state from the key database 107 or the strategy database 108, and edits a Web page of a reference screen including this information and sends it to the client computer. In this way, collection of an execution result of the strategy from the plurality of strategy executor clients 106 is performed by the task improvement support system 100.

In step S6, the strategy formulator instructs the application server 104 to analyze the execution result of the strategy using the strategy formulator client 105. The application server 104 extracts an execution result and a progress state of the strategy from the key database 107 or the strategy database 108, compiles execution results of collected strategies, and analyzes factors such as an analysis of a correlation among options and combinations of options in which a performance index of a strategy becomes high. Processing executed in the task improvement support system 100 includes the following.
(1) Changing executed high priority strategy into subdivided strategies which are combinations of factors serving as a minimum unit of a task component and arranging the subdivided strategies in an order of higher performance indexes.
(2) In the case in which a threshold (cutoff point), at which a profit is generated, is set for the performance index, setting a subdivided strategy exceeding this threshold as a recommended strategy.
(3) Setting a relational expression of combinations of factors of several task components and performance of a strategy in advance and, if data of the relational expression is collected in step 55, automatically preparing a strategy consisting of a combination of factors making a performance index value high regardless of presence or absence of implementation and setting this as a recommend strategy.
   Alternatively,
(4) Using a well-known technique of statistical analysis such as regression analysis with the performance index of the strategy as an explained variable and the factor of the task component as an explanatory variable to prepare a strategy consisting of a combination of factors of task components of the strategy and deciding this as a recommend strategy.

The application server 104 edits a Web page including information such an analysis result and sends it to the strategy formulator client 105 which is instructed to perform the analysis.

Note that the analysis of an execution result of a strategy may be performed not only by a formulator of the strategy but also by an executor of the strategy.

Finally, the application server 104 accumulates the result of the compilation and the factor analysis in step S6 and the information on the high priority strategy as new knowledge to be used in the task improvement support system (step S7). Therefore, in the next execution of the task improvement support method in accordance with this embodiment, in step S4, a list of high priority strategies is prepared based upon the existing knowledge and the new knowledge accumulated in step S7.

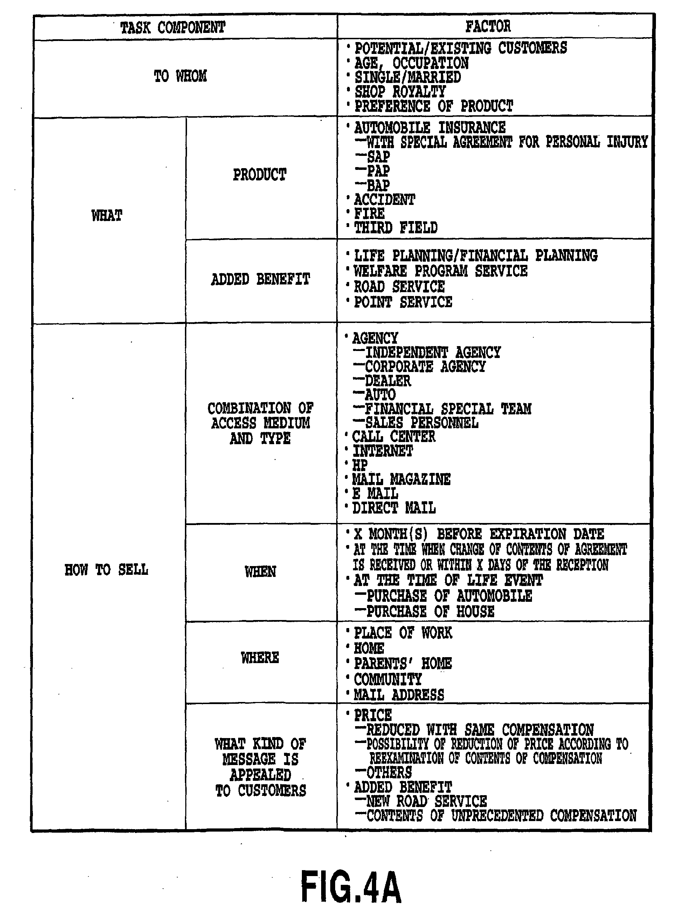

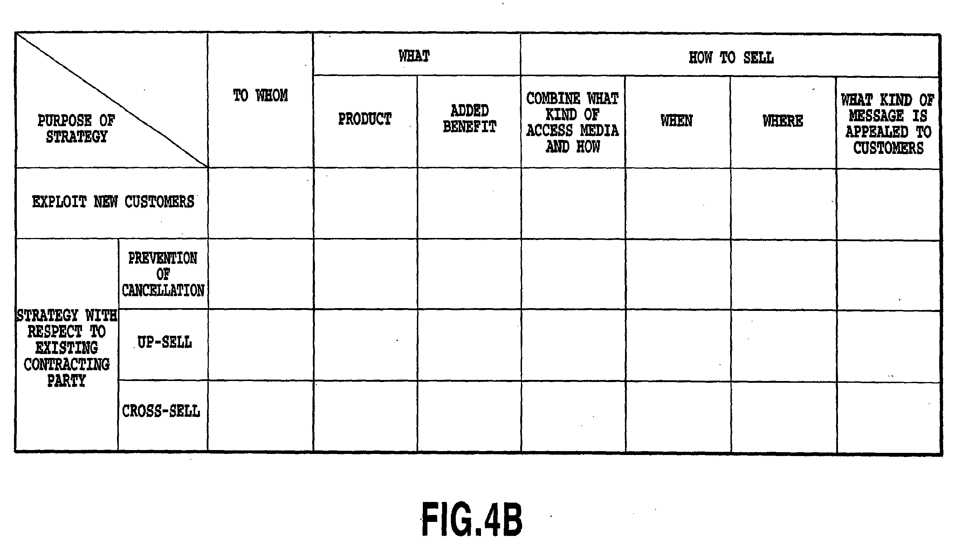

Next, a user interface of the task improvement support method in accordance with this embodiment will be described with reference to FIGS. 4 to 13B with improvement of a sales task of a non-life insurance as an example.

FIGS. 4A and 4B illustrate an example of a frame of a task component of a task, task components and factors thereof. As shown in FIG. 4A, the task components are constituted by items "to whom", "what", and "how to sell". Options (factors) of the respective task components are shown in the right part of the figure. For example, the factors of the task component "to whom" specifies a customer segment indicating who is set as a target of a sales strategy, and include factors, for example, customer attributes such as distinction between a potential customer and an existing customer, age, and occupation, shop royalty, production preference, and the like.

In addition, as shown in FIG. 4B, the task components "what" and "how to sell" are further subdivided and, for example, the task component "what" is constituted by more detailed task components such as "product" and "added benefit". A strategy for the task can be formulated by combining these factors.

Further, a strategy for a task is formulated for each purpose of the strategy. In the example shown in the figure, purposes of a strategy include exploitation of new customers, prevention of cancellation, grade-up (up-sell) of a product purchased by a customer of a seller, and sales of a new product other than the product purchased by the customer of the seller (cross-sell). Moreover, although not shown in the figure, as a performance index in the case of a sales task of a non-life insurance, for example, an estimated profit of a sold product is defined.

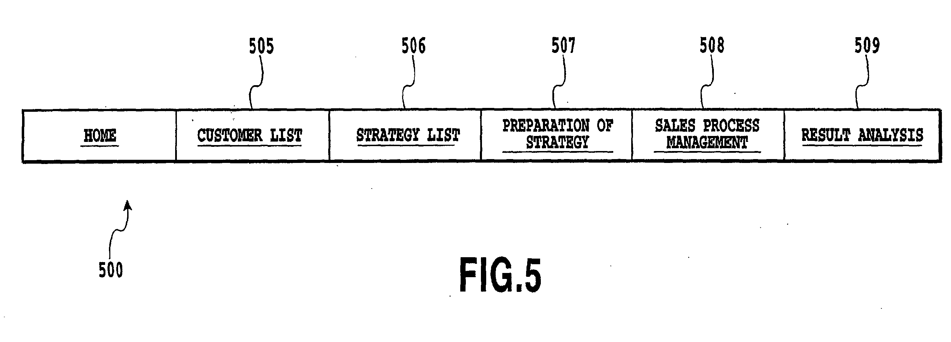

FIG. 5 illustrates an example of a menu on the Web page which is displayed on the display of the strategy formulator client 105 who has accessed the task improvement support system 100 in step S1. A menu 500 includes areas 505, 506, 507, 508, and 509 which can be selected using a mouse or the like.

The area 505 is selected when a list of information on a customer (customer list) is displayed. The area 506 is selected when a high priority strategy list is displayed. The area 507 is selected when a strategy is prepared. The area 508 is selected when a business negotiation between a person in charge of sales and a customer is managed. The area 509 is selected when an execution result of a strategy is analyzed. In the case in which these areas are selected, an instruction corresponding to each area is sent to the application server 104. The application server 104 executes a CGI script or the like loaded inside thereof, thereby performing corresponding information processing and edit the next screen which should be displayed on the display of the strategy formulator client 105.

FIG. 6 illustrates an example of a screen for preparing a strategy, which is displayed on the display of the strategy formulator client 105 in the case in which the area 507 of FIG. 5 is selected by a strategy formulator. On a screen 600, there are provided a display column 605 of a target task of a strategy, an input column 606 of a purpose of a strategy, a group of a target product of a task, a name of a strategy and an implementation period of a strategy, an input column 607 of timing for implementing a strategy and an access point for a customer, an input column 608 of a type of the target product, an input column 609 of a customer segment, an input column 610 of a solicitation point of a product appealing to the customer, an input column 611 of an access method to the customer, and an input column 612 of a base to be a target of the strategy.

In an example shown in FIG. 6, the target task of a strategy is an insurance sales task of an automobile sales company. In addition, the purpose of a strategy is exploitation of new customers, the group of a target product is a non-life insurance (automobile insurance), the name is "Care", and the implementation period of a strategy is September 1 to 30, 2001. In addition, the timing for implementing a strategy is before noon on holiday, the access point to a customer is a home of the customer, and the type of a target product is a comprehensive insurance with a special agreement for personal injury. Further, the customer segment is "excellent customer base". Here, the customer segment is a range indicating who is made a target of a sales strategy and, for example, customer attributes such as distinction of a potential customer and an existing customer, age, occupation, and the like, a shop royalty, segmentation according to product preference, and the like are included in the customer segment.

In addition, a solicitation point of this product is that an unprecedented compensation of personal injury can be obtained with the same price, and an access method is performed in an order of a direct mail, a call center, and persuasion at an automobile dealer.

These pieces of information can be inputted directly from the keyboard of the strategy formulator client 105 or by selecting a desired item from a list box. The inputted information is sent from the strategy formulator client 105 to the application server 104 by depressing a button 603.

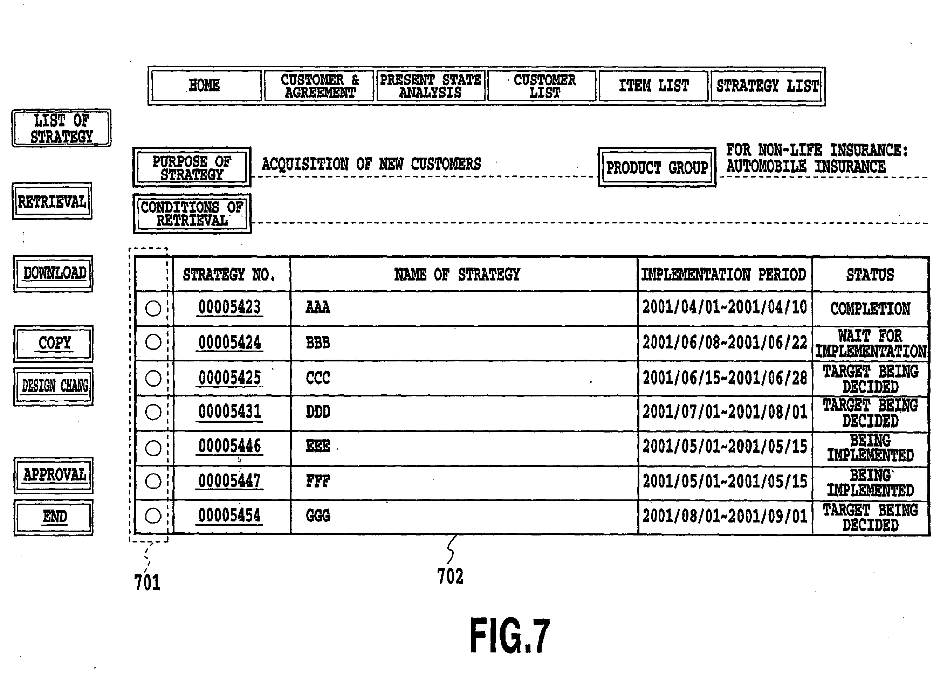

FIG. 7 illustrates an example of a high priority strategy list to be displayed on the display of the strategy formulator client 105 or the strategy executor client 106 in step S4 or S5. The high priority strategy list includes information, for example, an identification number of a strategy, a name of a strategy, an implementation period of a strategy, and the like. A strategy formulator or a strategy executor can browse this list to select one or more strategies corresponding to a desired strategy from a checkbox 701.

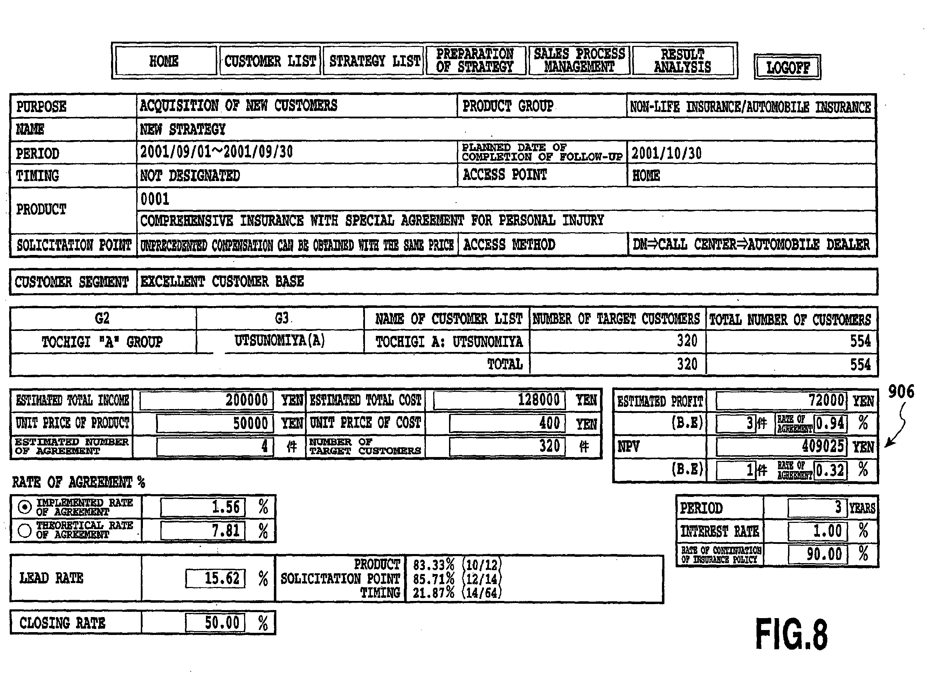

FIG. 8 illustrates an example of a screen for simulation of performance of a strategy which is displayed on the display of the strategy formulator client 105 in step S4. In the example shown in this figure, values can be inputted in display columns of factors such as a unit price of insurance which is a product, a unit price of strategy execution cost, a contract term of an insurance, an interest rate, and a continuation rate. When an executor of a strategy inputs estimated values in the display columns, simulation based upon the changed estimated values is performed in the application server 104, and a new performance index 906 is calculated.

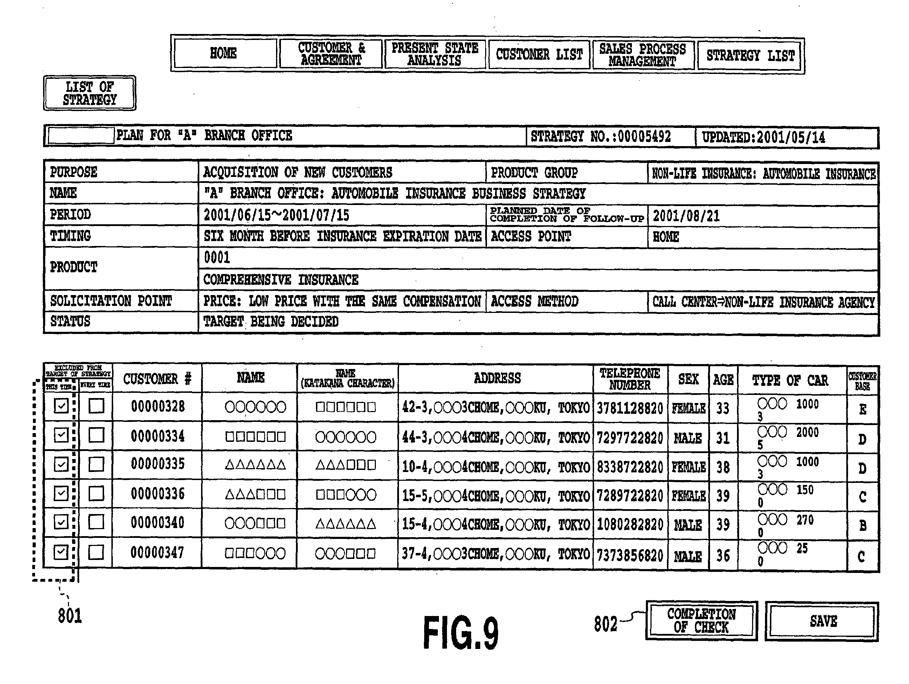

In addition, when a strategy which should be executed by the strategy executor is selected on the screen shown in FIG. 7, the application server 104 displays information of a customer on a display of a client computer and receives an instruction about customers excluded from a target for whom the strategy is executed. An example of a screen displayed in this case is shown in FIG. 9. The application server 104 receives propriety of execution of the strategy for each customer from a user via this screen. Then, when a check completion button 802 is depressed, the application server 104 stores an identification number of a designated strategy and customers in the key database 107 associating them with each other.

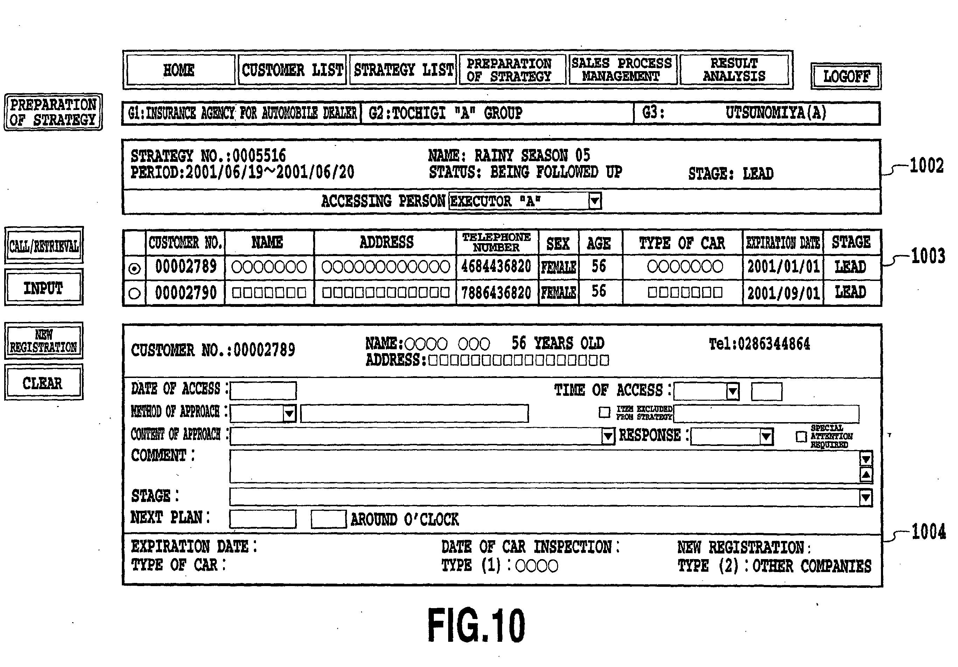

FIG. 10 illustrates an example of an input screen of a strategy execution result displayed on the display of the strategy executor client 106 in step S5. As shown in this figure, a display column 1002 of information on a strategy selected by the strategy executor, a display column 1003 of customers for whom the strategy executor is responsible, and an input column 1004 of an execution result of the strategy with respect to a customer are arranged on the input screen of the strategy execution result. The strategy executor inputs a date and time of access to the customer, a method of approach, contents of approach, response of the customer, and the like in the input column 1004.

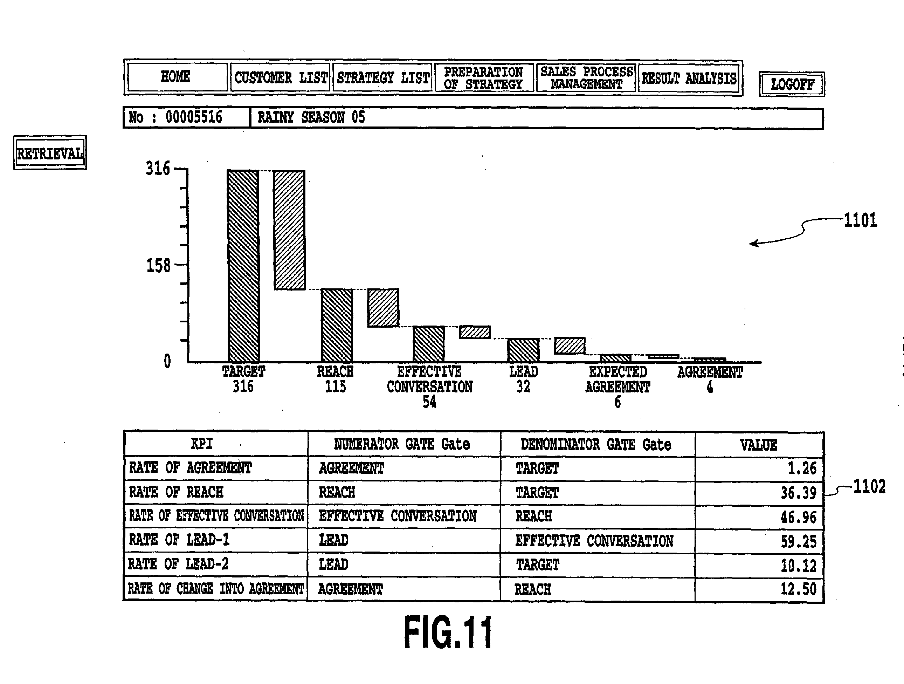

FIG. 11 illustrates an example of a reference screen of an execution result of a strategy displayed on the display of the strategy formulator client 105 or the strategy executor client 106 in step S5. A vertical axis of a graph 1101 shown in this figure indicates the number of customers and a horizontal axis thereof indicates stages relating to purchase of a product by customers. Among them, "target" indicates existing customers or potential customers to be targets of the strategy. "Reach" indicates customers who have responded to approach but have not been provided with information on a product. "Effective conversation" indicates customers with whom a person in charge of sales could have effective conversation about a product. "Lead" indicates a customer to whom the person in charge of sales has provided more detailed information about the product taking a step forward from the state of the effective conversation. "Expected agreement" indicates customers with whom an agreement for purchase of a product is expected to be concluded. "Agreement" indicates customers with whom the agreement has been concluded.

A table 1102 in a lower part of this figure indicates an index of performance of a strategy. In this embodiment, the index of performance is represented by a ratio of transition of states of a customer, for example, (the number of customers in the state of "agreement")/(the number of customers in the state of " target"), (the number of customers in the state of "reach")/(the number of customers in the state of "target"), or the like.

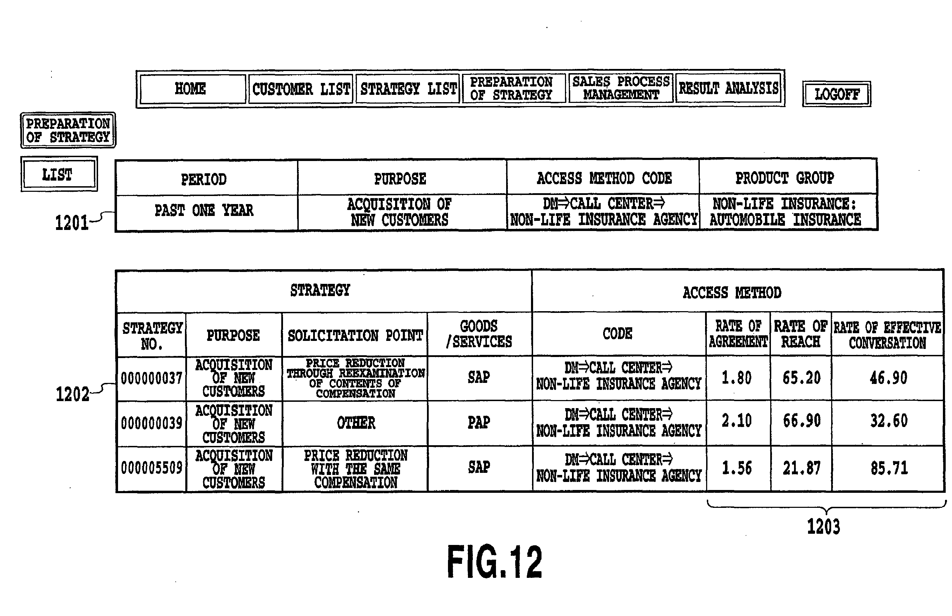

FIG. 12 illustrates an example of a screen of an analysis result of a strategy displayed on the display of the strategy formulator client 105 in step S6. In the example shown in this figure, information 1201, which specifies an implementation period of a strategy, a purpose of a strategy, an implementation method, an access method code, and a product group, and an analysis result 1202 for each strategy are arranged on the screen. Then, an index 1203 of performance for each strategy is displayed on the right side of the analysis result 1202. Contents of this index are the same as those described with reference to FIG. 11 before.

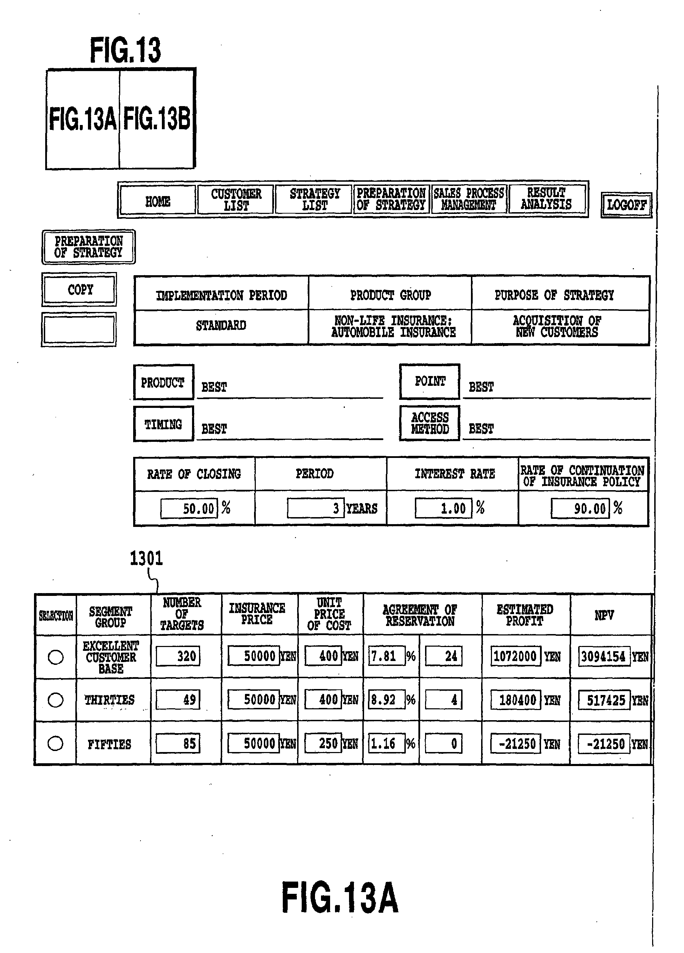

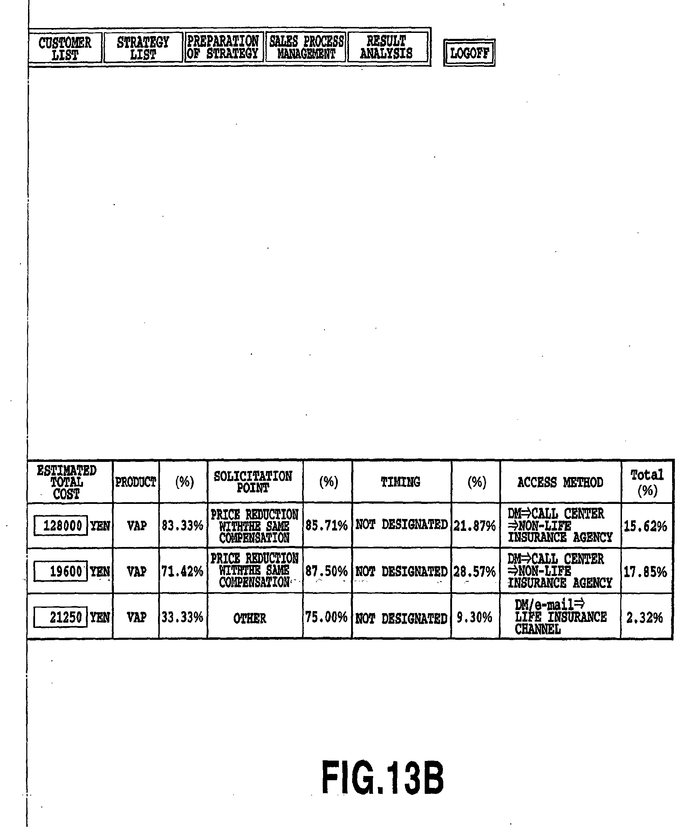

FIGS. 13A and 13B illustrate an example of a screen from accumulation of knowledge to the next strategy (step 57 to step S3 in FIG. 3) in accordance with this embodiment. A strategy formulator gives an instruction from the client 105 such that a best strategy contrived from accumulated knowledge is displayed with the product group assumed as an automobile insurance and the purpose of a strategy assumed as exploitation of new customers. The task improvement support system 100 contrives a recommend strategy and displays the recommend strategy in a descending order of a performance index NPV (Net Present Value) as shown in this figure.

Note that, although the example of supporting task improvement for a sales task is described in this embodiment, the present invention is also applicable to various tasks as shown in a table below. Table 1 indicates an example of tasks to which the present invention is applied, components of the tasks, and performance indexes.

**[Table 1]**

| Task | Task Component | Performance Index |
|---|---|---|
| Sales Task | What kind of product is sold, to whom it is sold, when it is sold, where it is sold, which access media are combined and how the media are combined, and with what kind of message is solicited for the sales | An estimated profit of goods or services to be sold, coverage of sales (rate of coverage of target customers) and a breakdown index thereof, as well as a rate of win (rate of agreement of covered customers) and a breakdown index thereof |
| Purchase Task | What kind of product is purchased, from whom it is purchased, when it is purchased, in which lot unit it is purchased, and with what kind of delivery method it is purchased | Total cost including a price of main body of goods or services to be purchased as well as inventory, missing product, order, and delivery costs |
| Manufacturing Task | Using which material and with what kind of manufacturing process a product is manufactured | Total cost including manufacturing cost as well as product inventory and missing product costs |
| Research and Development | How much time is invested, who invests the time, in what kind of product the time is invested, and how the time is invested | A rate of success of new product development, business value of product |
| Indirect Task | What kind of service is | Evaluation of |
| | provided, to whom (internal customers) the service is provided, and in which frequency the product is provided | internal customers after providing cost information for service provision, cost for each task, and a performance rate evaluated by the internal customers |
| General Affairs | What kind of input is laid in, from whom the input is laid in, when the input is laid in, in which lot unit the input is laid in, and what kind of cost the input is laid in; what kinds of processing is applied to the input, and in what kind of means the processing is applied; what kind of output is provided, to whom (internal customers, external customers) the output is provided, when the output is provided, in what kind of lot unit the output is provided, in what kind of cost (price) the output is provided | Cost, cycle time, quality (rate of error, customer satisfaction, etc.) |
| Employment Task | What kind of human resources are employed, from where the human resources are employed, through which channel the human resources are employed, and when the human resources are employed | A personal evaluation index of an employed person |
| Education Task | What kind of subject is learnt, who learns the subject, when the subject is learnt, and with what kind of means the subject is learnt | A personal evaluation index of an educated person |
| Investment Task | What kind of investment means is provided, to what kind of investment target the investment means is provided, when the investment means is provided, under what kind of conditions the investment means is provided, and how much | Procurement cost of investment financial fund, a business value of an investment destination |
| | investment means is provided | |

Business entities utilizing the task improvement support system of the present invention includes a variety of sellers such as a seller of goods and a seller of services. In addition, the task improvement support system of the present invention includes, other than a system in one company, a form in which terminals of a seller and a sales agent thereof or a manufacturer and a retailer, other plural business entities, and the like are connected to each other through a network.

In addition, the task improvement support system of the present invention may be a central system provided in one company or may be a system in an implementation form of recommending a sales strategy of higher accuracy by unitarily managing data of a plurality of companies including other business types and other companies, or the like, for example, a form of an application service provider (ASP) or the like.

In addition, the task improvement support system 100 may be a system provided with a head office server function in the case in which each seller is a branch office or the like of a certain corporation or may be a server or the like which is provided in an external organization for performing sales strategy design support of each corporation.

Further, input of an execution result of a strategy with respect to the task improvement support system 100 also includes a form of receiving information from other systems.

Moreover, transmission and reception of data may take a form of batch processing or may take a form of online transaction processing.

### (Second embodiment)

A network system in accordance with a second embodiment of the present invention will be hereinafter described and, then, a basic flow in accordance with the second embodiment of the present invention will be described with a sales task of an automobile insurance by a non-life insurance company through an automobile dealer as an example in the same manner as the first embodiment.

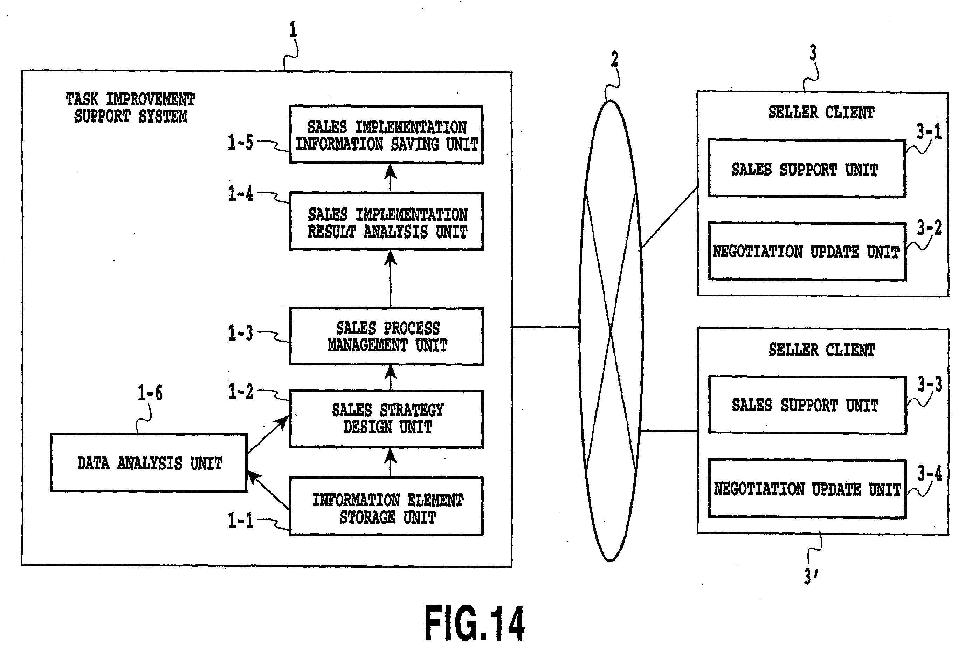

FIG. 14 is a system diagram showing a basic structure of the network system in accordance with the second embodiment of the present invention. Note that only an example of the structure of the network system of the present invention is shown, and the structure is not limited to this.

The network system of the present invention is provided with seller clients 3, 3' installed in a seller.

Usually, the seller clients 3, 3' are information processing apparatuses such as servers, which are large computers, personal computers, or work stations. Other than these, various information processing apparatuses such as a wireless communication terminal such as a cellular phone or a PHS, a portable information terminal incorporating functions of the wireless communication terminal, a game machine, a dedicated terminal such as an Internet TV, and a television conference system are included.

The seller clients are connected to the task improvement support system by a computer network represented by the Internet.

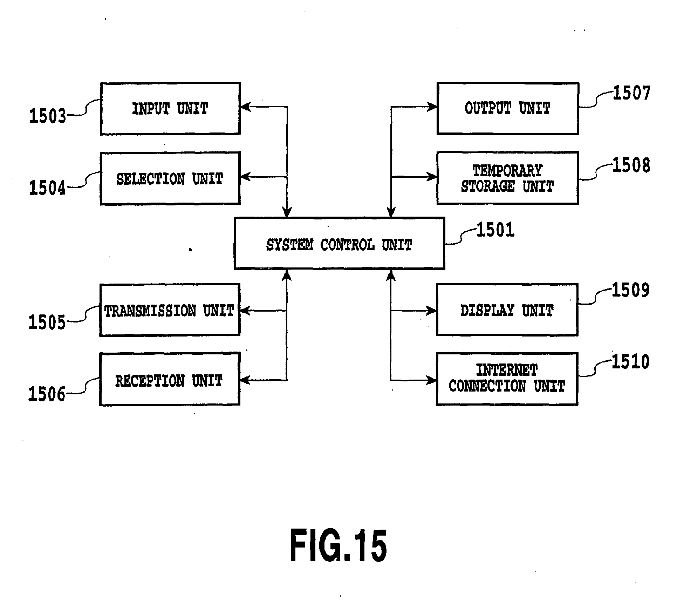

FIG. 15 shows a basic hardware configuration of the seller client used in the network system in accordance with the present invention.

The seller clients 3, 3' are constituted by an input unit 1503 with which a seller inputs data or inputs an instruction for operation or the like; a temporary storage unit 1508 for temporarily storing received data or inputted data; a display unit 1509 for outputting to display a menu screen or data; a selection unit 1504 for selecting the data displayed on this display unit; a transmission unit 1505 for sending data to a task improvement support system 1; a reception unit 1506 for receiving data from the task improvement support system 1; an output unit 1507 for printing to output data; an Internet connection unit 1510 for making connection to the Internet; and a system control unit 1501 for controlling the entire seller client.

In addition, the network system in accordance with this embodiment is provided with the task improvement support system 1 connected to the seller clients. Usually, the task improvement support system 1 is a large-scale server system or the like.

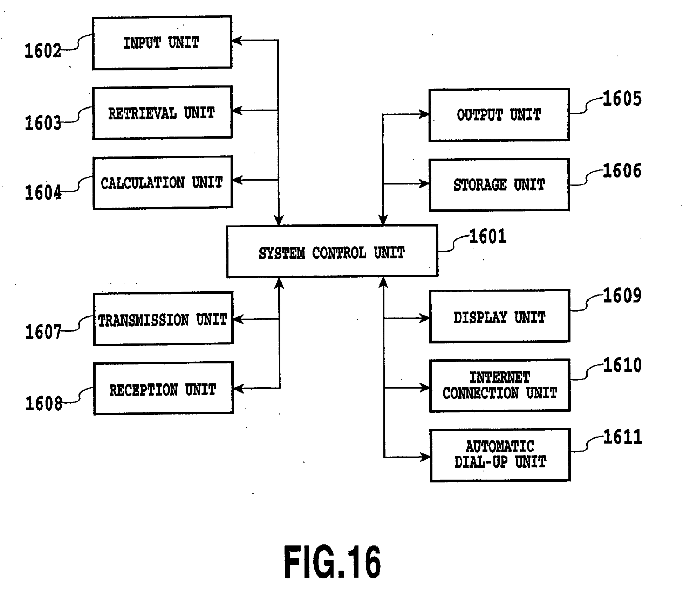

FIG. 16 shows a structure of the task improvement support system in accordance with this embodiment. The task improvement support system 1 is constituted by a reception unit 1608 for receiving data from a client computer; a transmission unit 1607 for sending data to the client computer; a retrieval unit 1603 for retrieving data on a database according to a request from the client computer; a storage unit 1606 for storing data from the client computer; a calculation unit 1604 for calculating a time in order to send time information to the client computer; an automatic dial-up unit 1611 for dialing an information processing apparatus of a user; an output unit 1605 for outputting data on the database; a display unit 1609 which is necessary for performing maintenance or the like of the server computer or the database; an input unit 1602; a system control unit 1601 for controlling the entire task improvement support system, an Internet connection unit 1610, and the like.

The task improvement support system 1 is provided with a database in which data including an existing customer list and a potential customer list of a seller are stored.

These are provided in a storage apparatus such as a database server, and the database is constructed by a relational database or the like so as to be convenient for extraction or the like of data.

In addition, as shown in FIG. 14, the task improvement support system 1 is provided with an information element accumulation unit 1-1; a sales strategy design unit 1-2 for performing design of a sales product or other sales strategies targeting a potential customer or an existing customer extracted based upon a result of data analysis; a sales process management unit 1-3 for performing data management for holding a business negotiation on the seller client side utilizing data in accordance with the designed sales strategies; a sales implementation result analysis unit 1-4; a sales strategies information saving unit 1-5, and a data analysis unit 1-6 for analyzing data.

These perform control having functions to be described later, respectively, and an application program for realizing each function performs data processing.

The task improvement support system 1 provided with the structure described above is provided with functions described below.

That is, the task improvement support system 1 performs input of basic information necessary for formulation of sales strategies with the input unit, and stores the basic information in the information element accumulation unit 1-1 in FIG. 14. In addition, the task improvement support system 1 designs a sales strategy effective for a target customer in the sales strategy design unit 1-2. Further, the task improvement support system 1 stores the designed sates strategy in the sales strategy information saving unit 1-5 and, at the same time, sends to output the sales strategy to a seller having the target customer of the strategy.

Moreover, when the seller implements the sales strategy and inputs an access result and a business negotiation result in the seller clients 3, 3' to send the results to the task improvement support system 1, the task improvement support system 1 stores the received sales strategy implementation result in the sales process management unit 1-3. Simultaneously, the task improvement support system 1 performs compilation, standard analysis, revenue and expenditure calculation, or the like of sales strategy implementation results in the sales implementation result analysis unit 1-4. Furthermore, the task improvement support system 1 automatically prepares the next sales strategy effective for a customer segment of the seller in the sales strategy design unit 1-2.

Here, sales strategies formulated in the task improvement support system 1 can be roughly classified according to sales purposes described below. Details of the processing will be described later.
(1) Acquisition of new customers. To design a sales strategy for the purpose of acquiring new customers of the seller.
(2) Continued sales including up-sell. To design a sales strategy for the purpose of continuous use of a product purchased by a customer of the seller or selling an upgrade product of the purchased product.
(3) Cross-sell. That is, to formulate a sales strategy for the purpose of selling a new product other than the product purchased by a customer of the seller.

In this specification, terms of new customer acquisition, up-sell, and cross-sell will be hereinafter used as required.

A customer database, in which data including an existing customer list, an expected customer list, and a potential customer list are stored, is provided in the task improvement support system 1. Customer data is stored for each seller in the customer database. In addition, the customer data is updated based upon data sent from each seller client. Other than customer attributes such as name, address, telephone number, age, and sex of a customer, a person in charge of sales, a purchase item, a purchase history, and other various data are included in the customer data.

In addition, the information element accumulation unit 1-1 serving as a basic information database, in which basic data concerning task components, factors, and a performance index for designing a sales strategy is stored, is provided in the task improvement support system 1.

Details of the basic data stored here is classified into task components and factors relating to value provision (value provision factor data), task components and factors relating to value communication (communication factor data) and factor and data thereof relating to contrivance of a performance index (strategy basic data). These will be hereinafter described.

### (1) Value provision factor data

Components of a sales task indicating which product is sold and to whom the product is sold, and options (factors) for each component are included in the value provision factor data. Factors of the task component of "to whom" are specifically, for example, subdivided segments of customers according to customer attributes such as distinction of a potential customer and an existing customer, age, and occupation, a degree of a royalty of a customer, product preference, and the like.

Factors of the task component of "which product" are specifically, for example, factors such as product categories and sub-classification thereof, combinations of services incidental to a product, and the like.

### (2) Communication factor data

Components of a sales task indicating based upon what kind of solicitation point and in what kind of combination of access media a product is sold and at which time and in which place the product is sold, and options (factors) for each component are included in the communication factor data. Here, as an example of factors of "based upon what kind of solicitation point", there is options consisting of combinations of types of effects for acustomer and prices.

In addition, factors of the task component of access medium to a customer are, for example, telephone, an electronic mail, the Internet, sales personnel of an automobile sales company, and the like.

In addition, factors of the task component of at which time a sales strategy targeting a customer is implemented are, for example, a product purchase motivation forming time, a media accessible time of the customer, and the like.

Further, factors of the task component of in which place a sales strategy targeting a customer is implemented indicate places where the customer accesses media such as a shop, a place of work, and a home of the customer.

### (3) Strategy basic data

The strategy basic data is data necessary for calculating an estimated value and an accrual measured value of a performance index value of a designed strategy. For example, the strategy basic data includes data of factors such as a strategy implementation unit cost on a medium of a communication factor, a revenue by sales unit of goods or services, a standard assumed profit of goods or services, cost on one telephone call for one customer, cost on one visit, and cost on printing and distribution for one brochure.

By adopting the structure as described above, in the present invention, transmission and reception and accumulation of data between the task improvement support system 1 and the seller clients 3, 3' via the network 2 becomes possible, and it becomes possible to design and analyze various sales strategies for marketing support.

Next, a flow of basic processing of the present invention will be described with a sales task of an automobile insurance in an automobile sales company as an example.

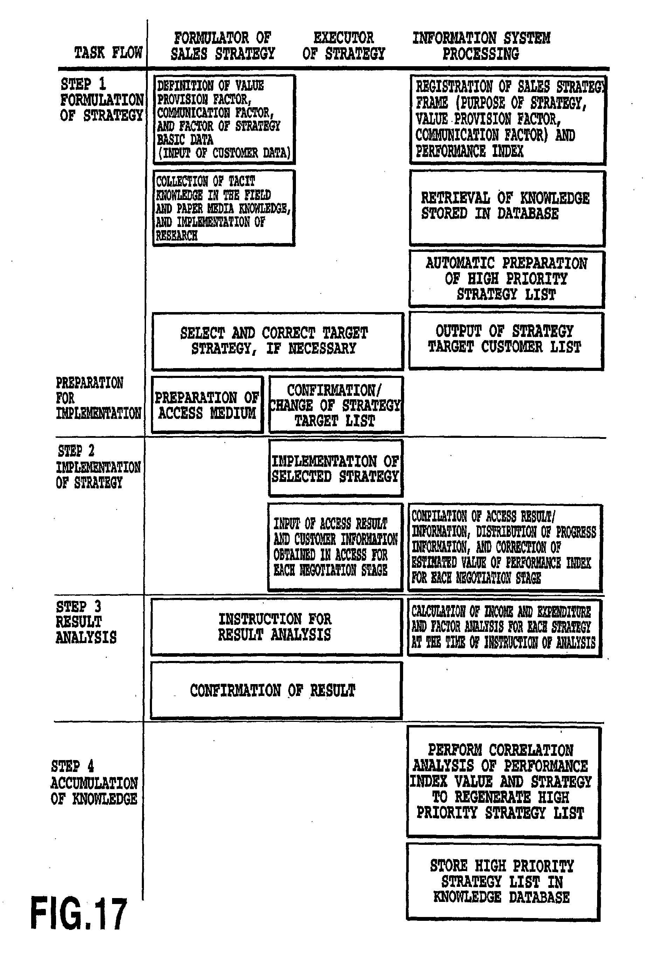

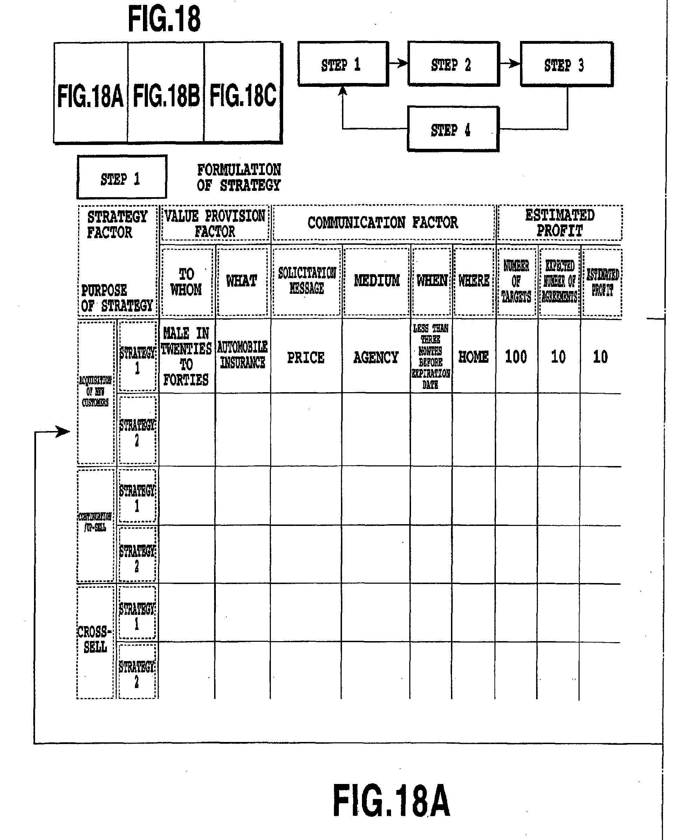

FIG. 17 is a flowchart showing a flow of basic processing of the present invention. In addition, FIGS. 18A to 18C are conceptual diagrams showing an overall picture of a flow of processing in the task improvement support system 1 in the embodiment of the present invention, and in particular shows the flow according to an example of transmission of screen images on the display unit of the seller clients 3, 3'.

First, in step 1 of FIG. 17, the sales strategy design unit 1-2 performs design and formulation of a sales strategy.

In the information element accumulation unit 1-1, data concerning each factor of task components of the value provision factor data and the communication factor data and each factor of the strategy basic data are stored in advance. In addition, these data are appropriately revised and updated by a strategy formulator and an executor as required. The sales strategy design unit 1-2 selects optimal combinations of the value provision factors and the communication factors to formulate a sales strategy based upon the data accumulated in this way. Then, the sales strategy design unit 1-2 selects a performance index factor for measuring performance of the sales strategy from the strategy basic data and calculates a performance index estimated value.

For example, in step 1 of FIG. 18A, the sales strategy design unit 1-2 selects a male in his twenties to forties (to whom) and an automobile insurance (what) as the value provision factor data in order to design a sales strategy for the purpose of acquiring new customers. Similarly, as the communication factor data, the sales strategy design unit 1-2 selects a price (with what kind of solicitation message), an agency (using what kind of medium), less than three month before expiration date (when), and a home (where). Here, the number of targets, the number of expected agreements, and an estimated profit are selected as factors of the strategy basic data. In addition, as an estimated value of the respective factors, 100 (the number of targets), 10 (the number of expected agreements), and 10 (an estimated profit) are calculated.

Next, data input of a list of target customers to become targets of the sales strategy is performed. However, the data input may be performed at the time of sales strategy design or customer data including potential customers, expected customers, and existing customers in each seller may be inputted and stored in advance. Other than receiving and inputting data inputted in the seller clients 3, 3' through a network, input of these data includes a form of reading to input data stored in an information storage medium or performing input in the input unit 1602 of the task improvement support system 1.

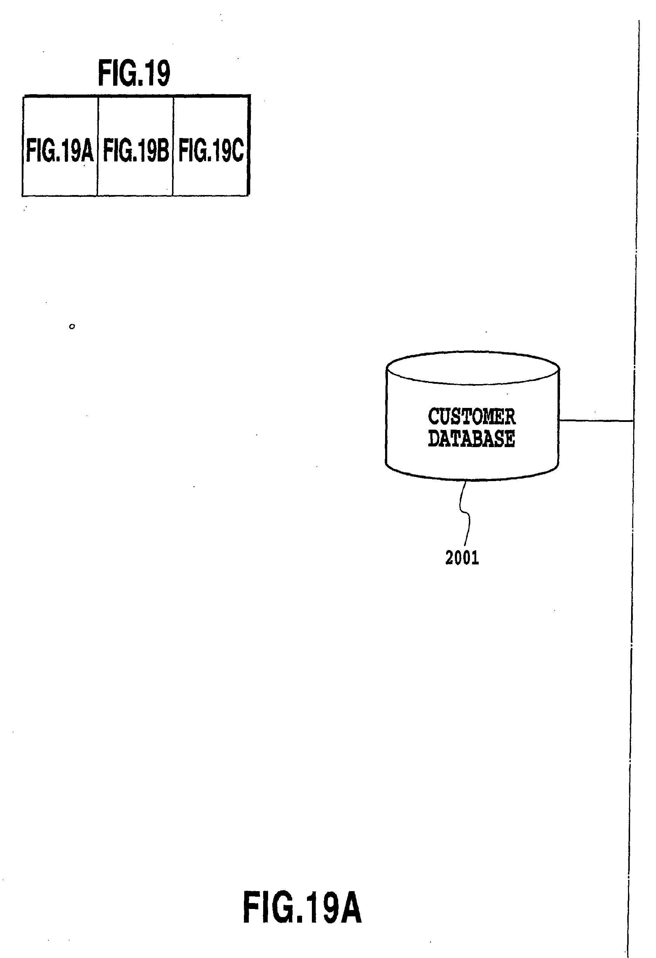

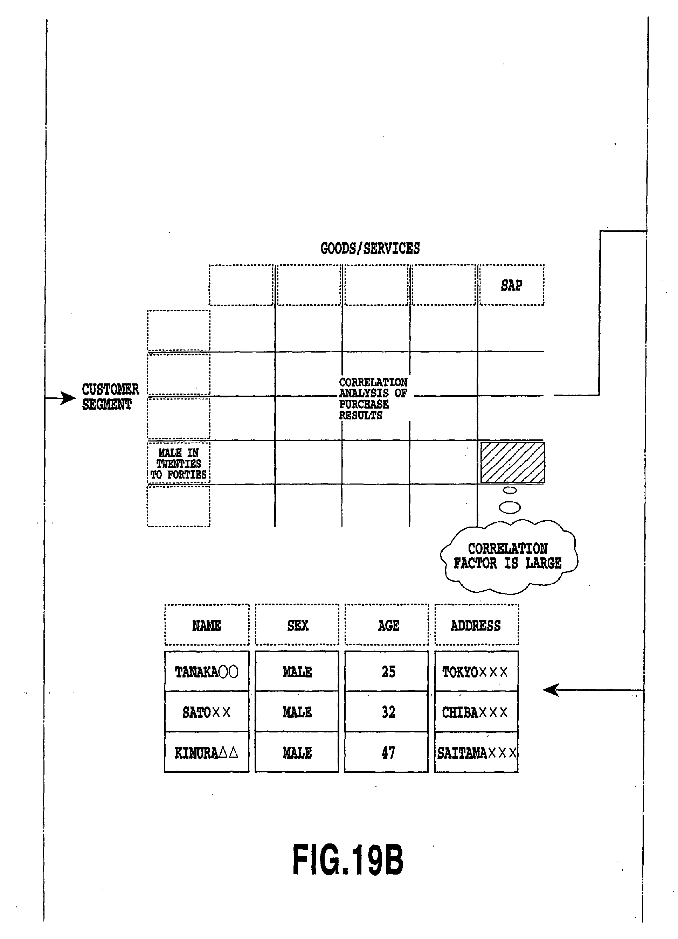

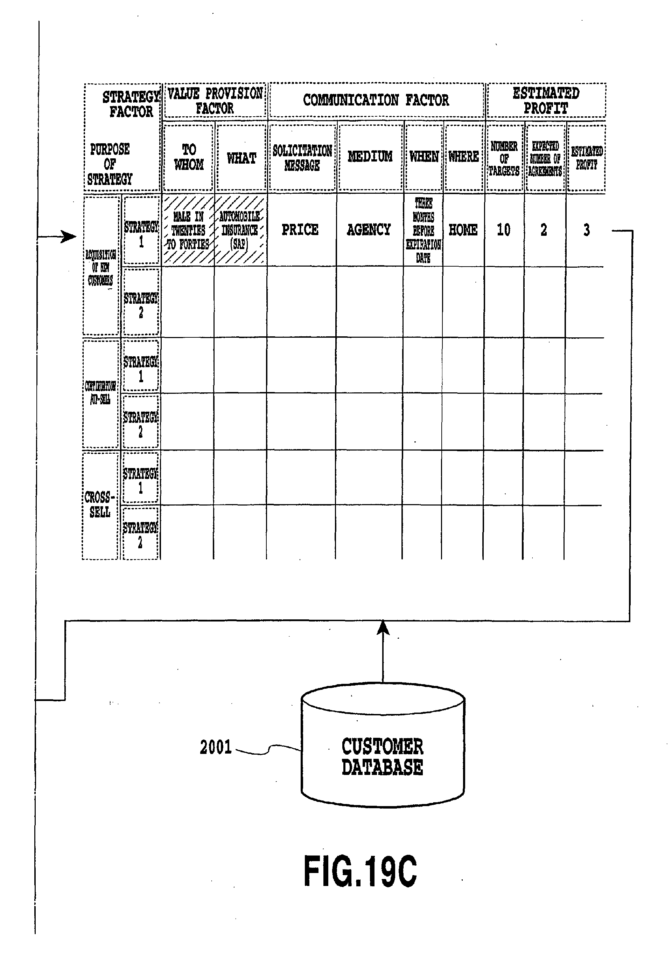

FIGS. 19A to 19C are diagrams showing an example of data processing concerning correlation analysis by the sales strategy design unit 1-2. As an example, based upon the customer database 2001, processing for performing analysis of a correlation distribution of purchase results from good/services and customer segments to display a result of the analysis is shown. Here, the sales strategy design unit 1-2 extracts a combination of a customer segment and goods or services with high possibility of sales, formulates a sales strategy for selling corresponding goods or services to expected customers of the same customer segment, and outputs a target customer list.

The sales strategy design unit 1-2 calculates a degree of consciousness of belonging to a seller based upon a trading history between a customer and the seller. Moreover, the sales strategy design unit 1-2 can combine the degree of consciousness of belonging and basic attributes of the customer such as age and address to define a customer segment with high possibility of sales.

Next, the sales strategy design unit 1-2 performs retrieval based upon the value provision factor selected in step 1 in FIG. 17 above, and extracts sales strategy data including communication factor and strategy basic data with conditions matching the selected factors out of data stored in the sales strategy information saving unit 1-5. As a result of the retrieval and the extraction, if strategies implemented in the past are extracted, the sales strategy design unit 1-2 arranges sales strategies in the past in the order from one with the highest achievement value of a selected performance index factor and prepares a list of high priority strategies.

In addition, the sales strategy design unit 1-2 can perform correction of sales strategy data and new registration of sales strategy data.

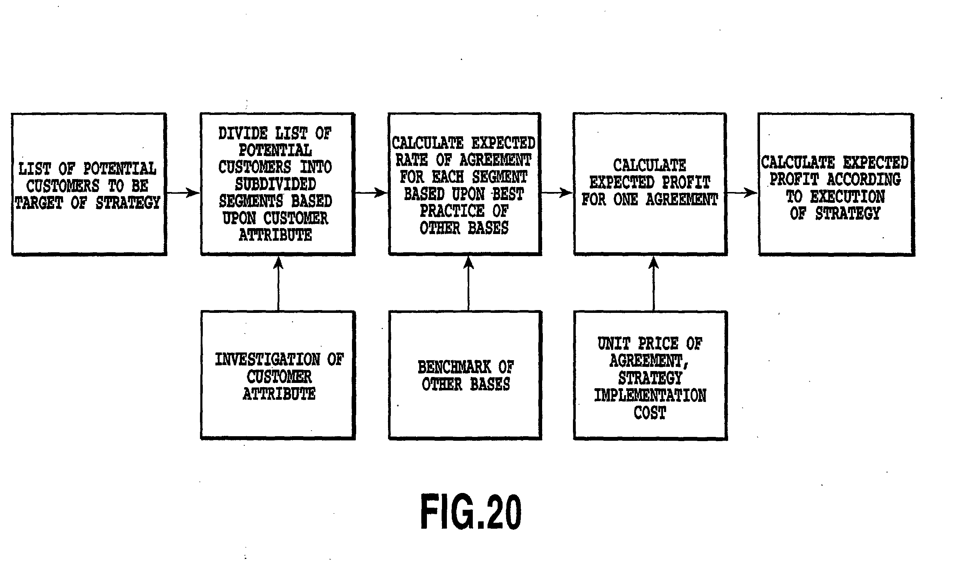

Next, an example of a simulation method of calculating an estimated profit as a result of execution of the selected strategy will be described based upon FIG. 20. First, a list of potential customers to become targets of a strategy is classified into segments using attribute investigation results of customers. Next, an estimated rate of agreement by customer segment is calculated using results such as a benchmark of other bases. According to the information, the sales strategy design unit 1-2 performs processing for calculating a rate of agreement of all strategy target customers from the estimate rate of agreement for each customer segment.

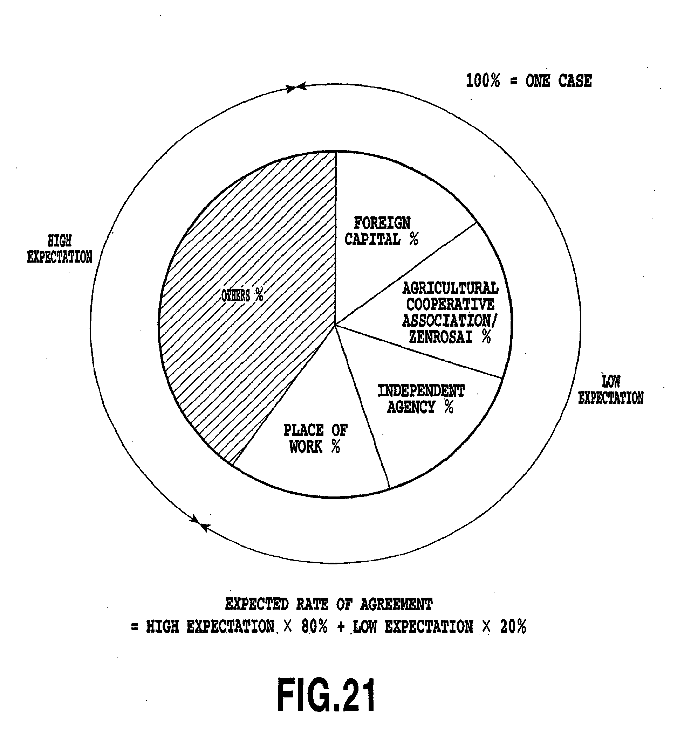

FIG. 21 is a view showing an example of a method of calculating a rate of agreement of all target customers from an estimated rate of agreement by customer segment. In the figure, a circle graph shows rates of subscribers for each type of insurance. Among them, subscribers of insurances of foreign capital companies, the Agricultural Cooperative Association/Zenrosai, which trade on low prices, insurances of places of work to which a discount by size is applied, insurance of independent agencies with high royalty for customers are less likely to cancel the insurance policies they have already taken out to purchase new insurances. Conversely, subscribers of insurances of other side job agencies, dealers, and the like are likely to cancel insurances they have already taken out to purchase new insurances. Based upon such high expectation and low expectation, the expected rate of agreement can be found according to the number of subscribers with high expectation of agreement × 80% + the number of subscribers with low expectation of agreement × 20%.

In addition, as the rate of agreement, based upon a best practice opportunity by purpose of strategy for each base or an average value of each base, an estimated rate of agreement in the base may be calculated.

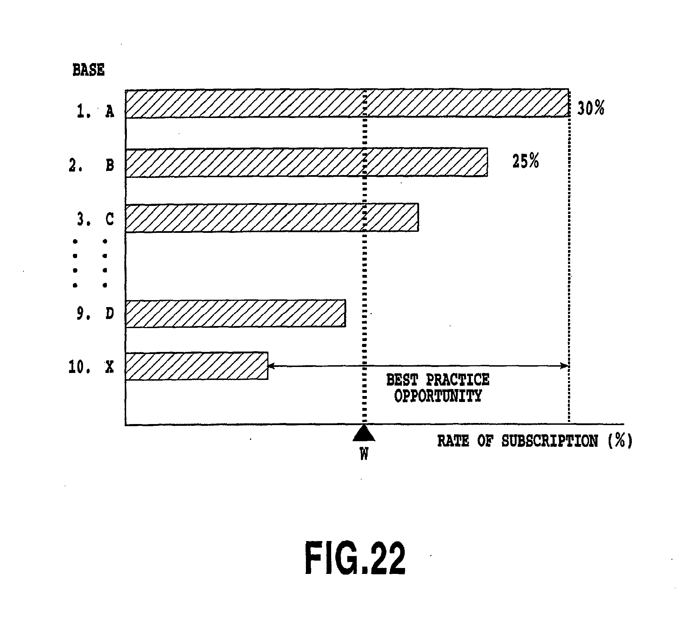

FIG. 22 shows an example of finding a best practice opportunity from data of comparison with other companies in a predetermined period. In the figure, a vertical axis indicates each base of an automobile sales company. In addition, a horizontal axis indicates an index of performance and indicates a rate of subscription (%) for an insurance with respect to the number of sales of automobiles in each base. Here, a rate of subscription of an insurance sold by a base A is 30% and a rate of subscription of an insurance sold by a base B is 25%, and W indicates an average of rates of subscription. A best practice opportunity, that is, a highest performance index in a base X can be found from rates of subscription in other bases.

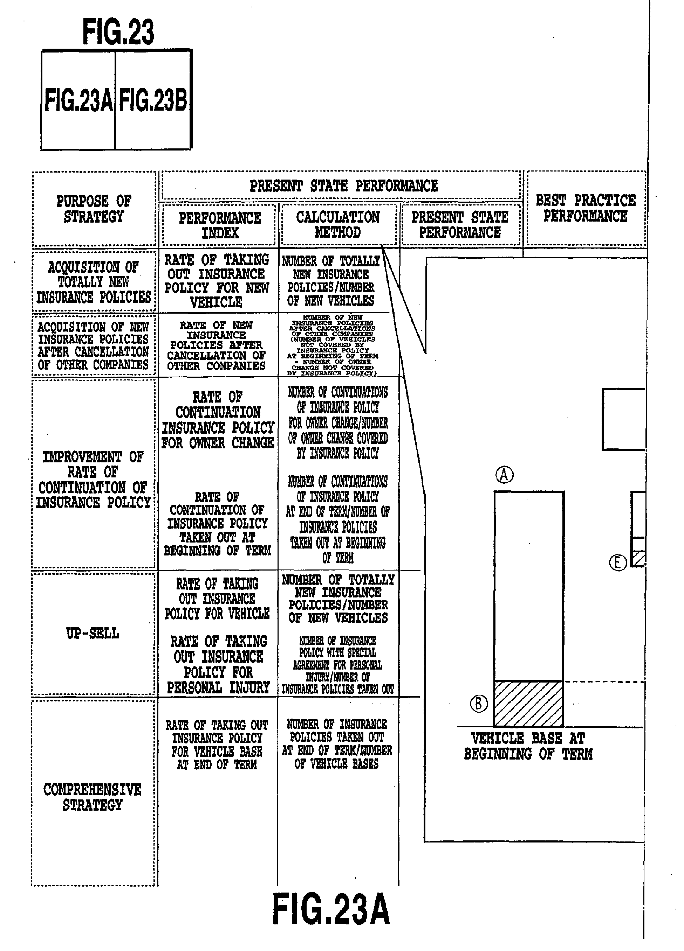

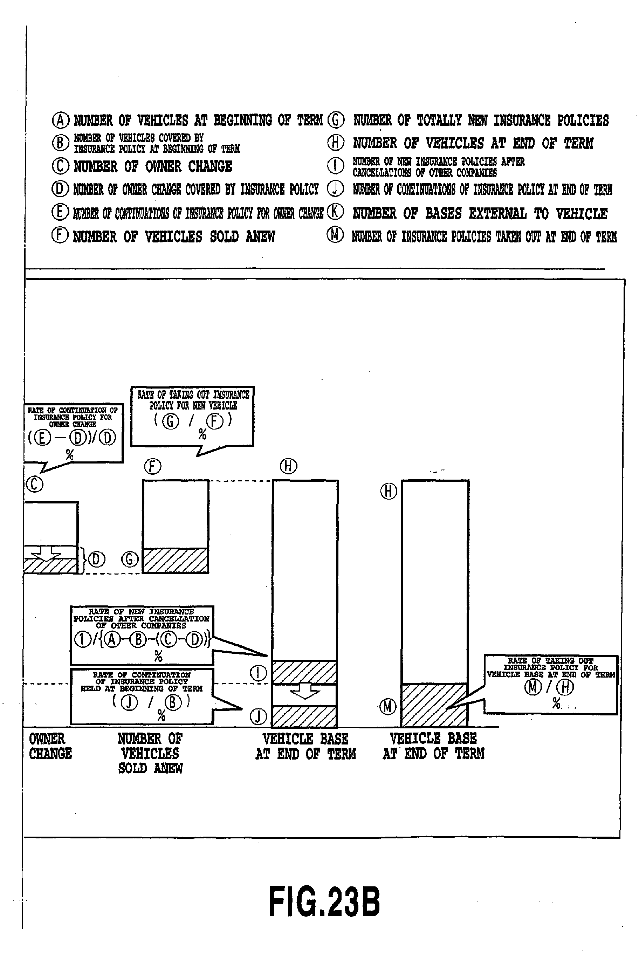

FIGS. 23A and 23B are illustrations of performance index values relating to a sales efficiency of an automobile insurance of an automobile sales company.

Moreover, the sales strategy design unit 1-2 calculates an estimated profit for one agreement from cost for one agreement unit price and strategy implementation (agreement unit price and strategy implementation cost) and crosses this with the number of potential customers and an estimated rate of agreement in abase, thereby calculating an estimated profit according to the strategy implementation.

The sales strategy design unit 1-2 arranges sales strategies, which are prepared anew by combinations of purposes of strategies and strategy factors from a sales strategy implementation result, in a descending order of an estimated profit and extracts sales strategies whose estimated profit exceeds a predetermined threshold. In addition, the sales strategy design unit 1-2 extracts existing customers or potential customers to be targets of strategies in order from a strategy with a highest estimated profit to a sales strategy with an estimated profit exceeding the threshold, and prepares a recommended sales strategy list.

When a desired sales strategy is selected from the recommended sales strategy list in the seller client, the sales strategy design unit 1-2 performs processing for dividing target customers of the decided sales strategy by base for which a person in charge of the seller is responsible and by responsible person in charge of sales and transmitting the target customers to the seller client 3, 3' to output them.

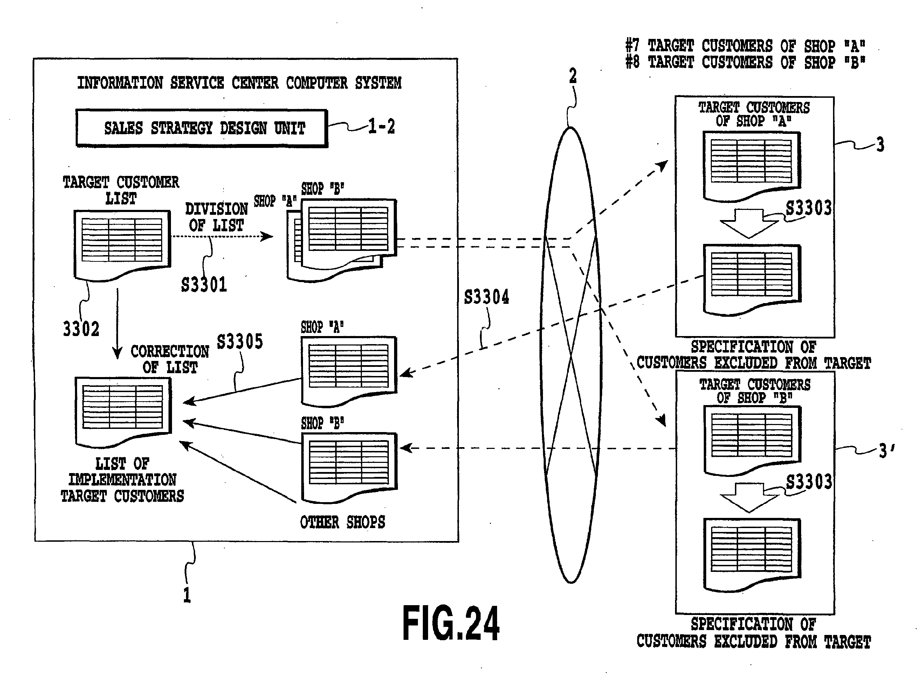

In the seller clients 3, 3', a strategy executor can apply revision processing such as deleting customers unsuitable as a target at the time of implementation of the strategy to the list. A system conceptual diagram showing a processing flow of this case is shown in FIG. 24. A target customer list 3302 is divided according to shops in charge (S3301) and sent to the seller clients 3, 3' of each shop. The data sent to the seller clients 3, 3' is revised based upon contact experiences of a salesperson in charge with customers (S3303), and the data after revision is sent to the task improvement support system 1 (S3304). The task improvement support system 1 revises stored data based upon the received data (S3305).

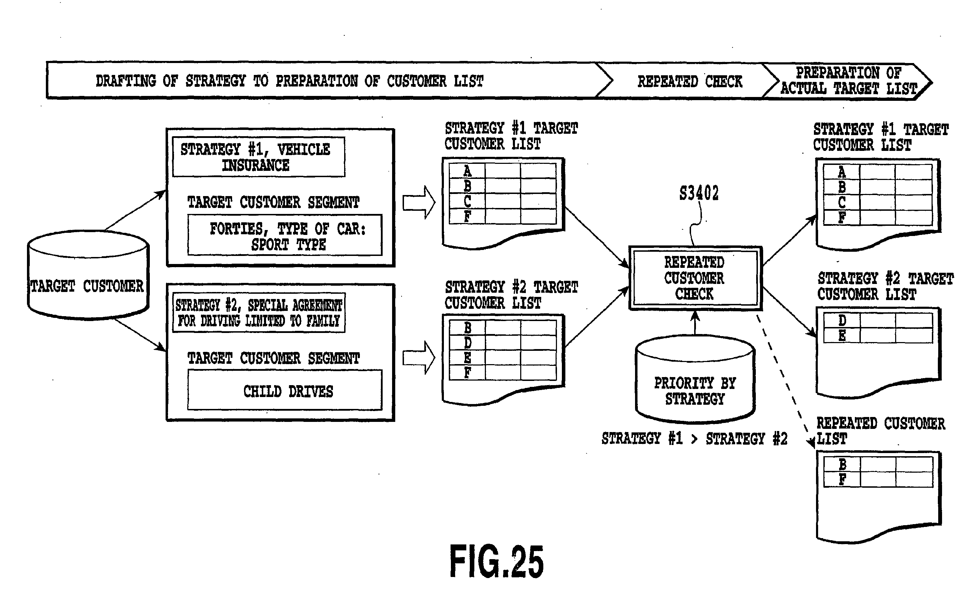

Note that, if priorities are given to sales strategies in advance in order to prevent different sales strategies from being implemented on an identical customer at the same time, in the case in which a plurality of sales strategies for an identical customer at an identical time are extracted, it is possible to output the sales strategies together with data indicating the priorities. FIG. 25 is a flowchart showing a flow of processing in this embodiment.

The sales strategy design unit 1-2 judges presence or absence of sales strategies having duplicated targets out of candidates of sales strategies (S3402) and, if there is duplication, performs comparison of performance index estimated values such as an estimated profit in the case in which each strategy is implemented, and incorporates a strategy with a high performance index estimated value in an implementation portfolio.

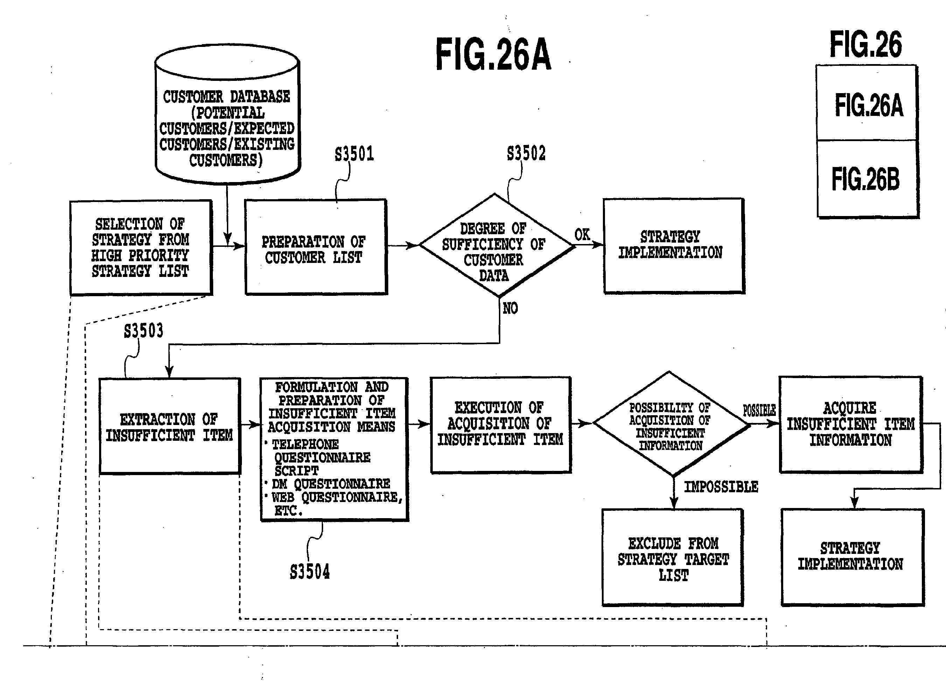

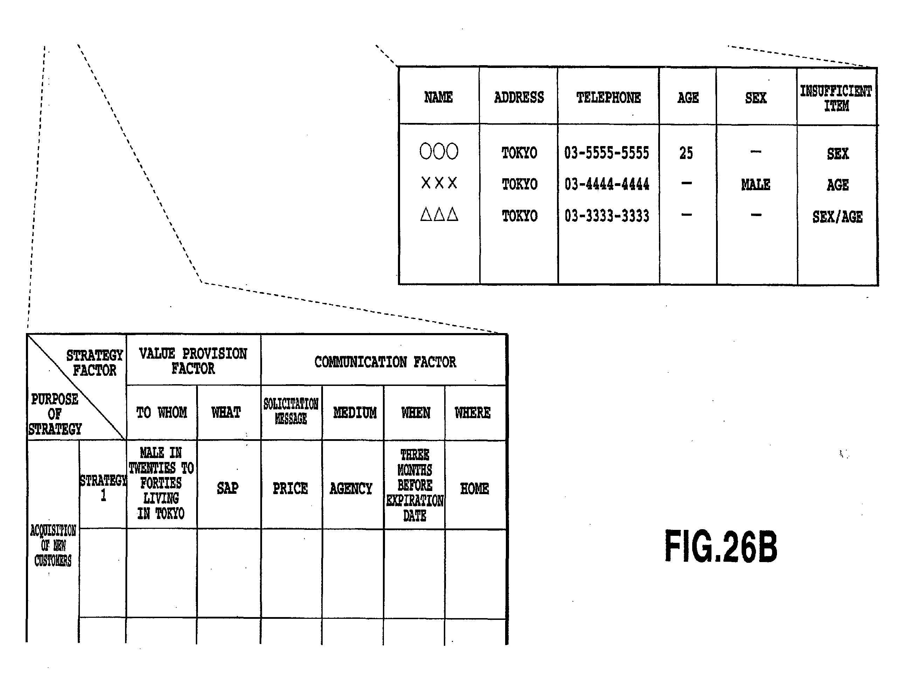

FIGS. 26A and 26B are diagrams showing a flow of processing which is executed in the case in which customer attribute items are insufficient.

The sales strategy design unit 1-2 collates a value provision factor of a selected strategy and customer attribute information of a list of customers, expected customers, and potential customers held by a seller in the sales strategy data prepared in the sales strategy design unit 1-2 (S3501). Subsequently, the sales strategy design unit 1-2 automatically distinguishes the insufficient customer attribute items in transmission of a solicitation value (S3502) and outputs the customer attribute items as customer attribute items which should be collected at the time of access (S3503). Then, according to combination of an access medium corresponding to an attribute item which could have already been grasped and a script element (question item) corresponding to an attribute item which is required to be grasped anew, the sales strategy design unit 1-2 prepares amessage including a solicitation message in a predetermined medium such as a direct mail, an operator script, a seller script, or a WEB page in accordance with procedures set in advance, and reflects the message on the access medium (S3504).

In preparation of the access medium of step 1 in FIG. 17, as the access medium used in a sales strategy, for example, there are a flyer, a brochure, a pamphlet, a DM, a postcard, an electric mail, and the like, and data inserted therein is automatically extracted according to individual customer attributes to constitute a sales support material. For example, this is in the form of inserting into a DM data of recommended goods/services according to customer attributes such as annual income, occupation, hobby, family structure, and the like. What kind of data is inserted and communicated to a customer having what kind of customer attributes is set in advance.

Next, implementation of a selected strategy and input of an access result in step 2 of FIG. 17 are performed.

Customers accessed for each sales strategy are divided for each stage of sales strategy implementation or the like such as a reach customer, a message communication successful customer, a customer who is capable of moving to the next access, and the like, and a contact history is inputted from the respective seller clients 3, 3'.

The task improvement support system 1 compiles a ratio of customers who have passed and customers who have not passed each sales strategy implementation stage and an attribute distribution state to accumulate them in a database in the inside thereof. In addition, data collected by a follow-up survey such as questionnaire investigation after strategy or the like is also inputted to the task improvement support system 1 from the outside as required, and is accumulated in the database. The data inputted in this way is unitarily managed in the task improvement support system 1. Consequently, it becomes possible for a seller to access the task improvement support system 1 from the seller clients 3, 3' and refer to a progress state and an access result of a sales strategy for customers of the seller.

In addition, the sales strategy design unit 1-2 performs processing for calculating a resource capacity such as personnel required for sales activities to perform scheduling for each access stage and processing for outputting an instruction of work in the next process to the respective seller clients 3, 3' and outputting, as a list, a development state for each individual customer and each sales strategy for allowing a supervisor to perform progress management of sales strategies.

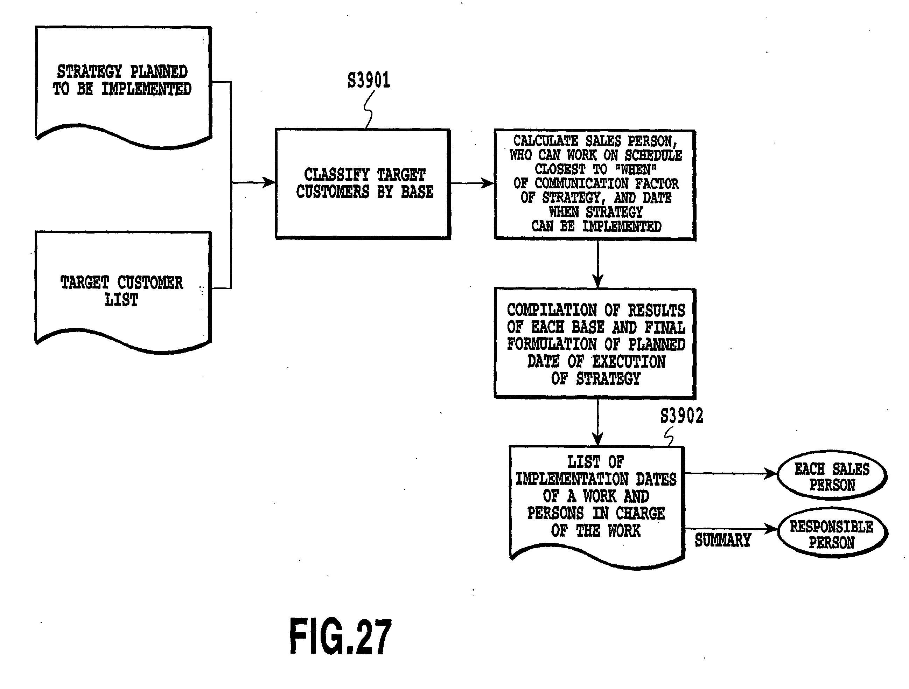

In FIG. 27, as an example of this embodiment, target customers are apportioned according to a base based upon implementation planned strategies and a target customer list (S3901). In each base, a salesperson who is capable of working on a date of strategy implementation, and time information is fed back to the task improvement support system 1 from the seller clients 3, 3' via a network 2. The strategy formulator compiles the result and outputs a date of implementation of work and a list of persons in charge of work which are finally decided (S3902).

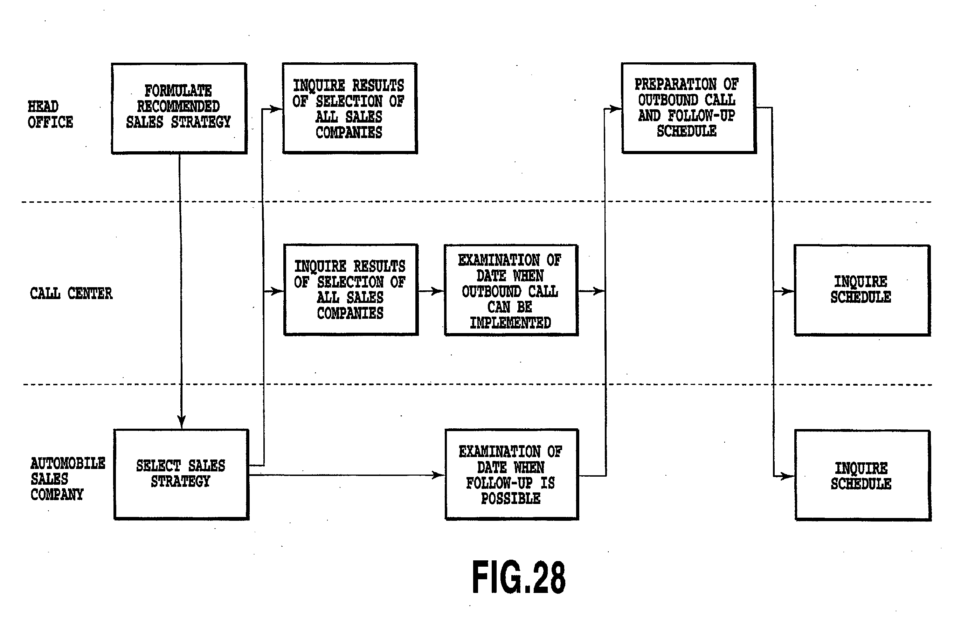

FIG. 28 shows a flow of processing in the case in which a head office of an automobile sales company formulates a recommended sales strategy and employees of each sales company select the formulated strategy. In the example shown in the figure, a call center refers to selection results of all the sales companies to examine a date when implementation of outbound call is possible. The head office prepares a schedule of the outbound call and follow-up based upon a result of examination in the call center and a result of examination of a date when follow-up to customers is possible after execution of the strategy in the automobile sales companies.

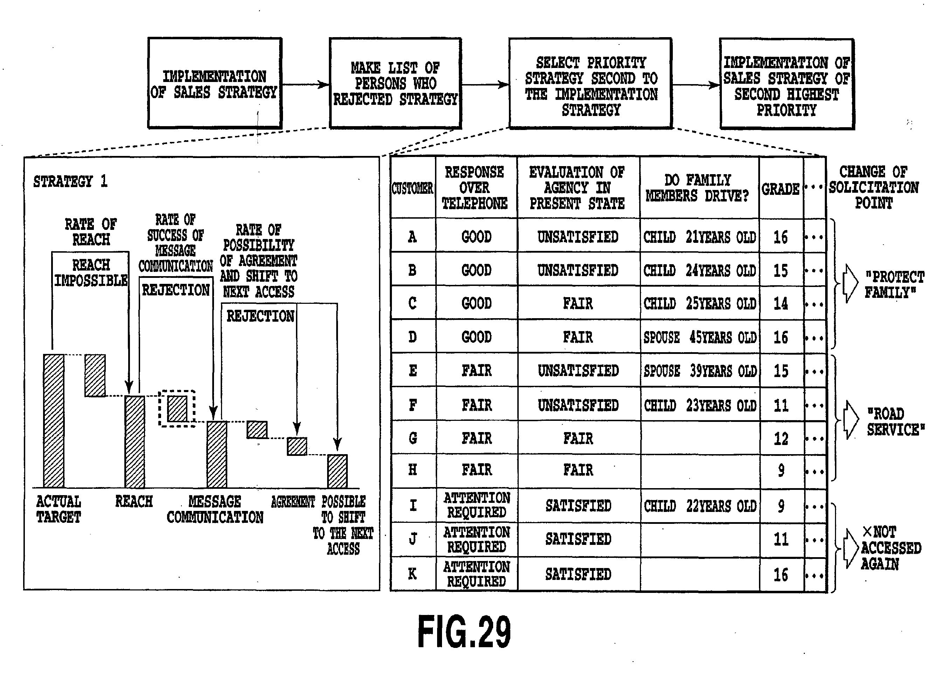

In addition, the task improvement support system 1 performs processing for automatically extracting customers who can be approached again, processing for automatically retrieving a point for which solicitation of a strategy is insufficient with respect to customer attributes recognized by the system, and processing for outputting a sales promotion method corresponding with each customer based on the final access result stage, customer attributes, and information obtained in sales activity for customers who have not passed through each stage. FIG. 29 shows an example of processing of this embodiment. A strategy having a next highest estimated value of performance index is automatically apportioned to expected customers who rejected the sales strategy at the time of message communication as a result of implementation of the sales strategy, and is implemented.

The sales strategy design unit 1-2 performs result analysis based upon the business negotiation result, which was inputted in the seller clients 3, 3' and sent to the task improvement support system 1, and automatically recommends a sales strategy which should be taken next (steps 3, 4 in FIG. 17).

The task improvement support system 1 performs processing for classifying sales strategies into groups which are defined from target goods or services and processing for classifying each sales strategy in each group for each customer segment as required. Subsequently, the task improvement support system 1 performs processing for evaluating and scoring performance of respective components of value provision factors and communication factors in each group or subgroup or combinations thereof in a relation with sales strategy implementation stages such as the reach customer, the message communication successful customer, and the customer who is capable of moving to the next access.

Subsequently, the task improvement support system 1 performs processing for extracting a sales strategy which has exceeded a threshold of a performance index set by a user as a candidate of the next and subsequent sales strategies based upon a combination of a value provision factor and a communication factor having a highest score (analysis target value) in the group or subgroup and an estimated cost and an estimated profit in the calculated sales strategy implementation.

In addition, in the case in which a sales strategy extracted by the business negotiation result analysis function provided in the task improvement support system 1 is registered in a storage device and a new strategy according to a combination of other purpose of strategy and strategy factor is inputted from the input unit 1602, the task improvement support system 1 prepares a sales strategy portfolio which is expected to have a highest performance index value within a limitation of parameters of the seller expected customers and existing customers.

In addition, the task improvement support system 1 updates data accumulated in the sales strategy information saving unit 1-5 based upon a result of a business negotiation and, at the same time, makes it possible to extract sales strategy design information which was most effective in each customer segment according to a purpose of strategy and goods/services at the time of design of a new sales strategy. Consequently, a profitability of a sales strategy can be increased every time the number of times of sales strategy implementation is increased. FIGS. 18A to 18C shows a flow of the processing of this embodiment.

In FIGS. 18A to 18C, formulation of a sales strategy is performed in step 1, and the seller performs execution of the strategy while confirming a business negotiation state in step 2. An execution result of the strategy performed in this way is analyzed in step 3, and a combination of factors of the implemented strategy is accumulated as knowledge together with a performance index in step 4. Moreover, strategies performed in the past are arranged based upon performance indexes to recommend a strategy exceeding the threshold.

The task improvement support system 1 accumulates a sales strategy implement result in the sales strategy information saving unit 1-5 based upon a result of the business negotiation. The sales strategy design unit 1-2 learns most effective sales strategy design in each customer segment based upon the stored implementation results.

In the present invention, data indicating a result of implementing a sales strategy is accumulated as shown in FIGS. 18A to 18C, and feedback to the next and subsequent marketing strategies is performed. Through repeating of this series of processing, it becomes possible to select a more meticulous and accurate sales strategy.

In this embodiment, a sales strategy frame consisting of value provision factors, communication factors, and purposes of strategy is prepared in advance and sales strategy implementation results are accumulated, whereby a learning function that a hypothesis of a strategy formulator is verified according to implementation result data is exerted. In addition, the sales strategy frame consisting of value provision factors, communication factors, and purposes of strategy is prepared in advance, whereby it is made possible to input sales strategy implementation results in the past and a hypothesis of a strategy formulator in the same frame and statistically process them, and a sales strategy which is more effective than only a sales strategy implementation result or a result according to only intuition of the strategy formulator is recommended.

Next, a flow of an embodiment of a sales task support system of the present invention will be described including illustration of options (factors) of specific components with a marketing support system for automobile insurance sales sold by an automobile sales company as an example. Note that this embodiment indicates an example and the present invention is not limited to this.

In the following embodiment, a manufacturer of goods/services is an insurance company, and goods/service to be an object of a sales strategy is an automobile insurance. In addition, an automobile sales company is assumed as a seller, and a customer who purchases an automobile from the seller is assumed as a customer to be a target. A customer list is stored in the information element accumulation unit 1-1 provided in the task improvement support system.

### Step 1: Sales strategy formulation

A table for storing data consisting of purposes of strategies, value provision factors, communication factors, and strategy basic data is prepared in the information element accumulation unit 1-1. Each element of data to be stored is data as listed below.

### (1) Purposes of strategies

· Sales of an automobile insurance to customers who have taken out an automobile insurance policy but have not purchased an automobile insurance through the automobile sales company.
· Sales of an automobile insurance to purchasers who have purchased automobiles for the first time.
· Continuous promotion to existing customers who have purchased an automobile insurance through an automobile insurance company.
· Changeover sales of a higher added value product to existing customers who have purchased an automobile insurance through an automobile insurance company.

### (2) Value provision factors

### 1. Customer segment (to whom)

Groping customers according to combinations of options (factors) of the following components.
· Five rank evaluation of strength of customer's consciousness of belonging to an automobile sales company.
· Segmentation at interval of ten years according to an age attribute of a customer.
· Segmentation according to a type of an automobile owned by a customer (leisure car, sport car, family car, luxury car, van, etc.)

### 2. Combination of a type of product and a special agreement (what)

As a type of product, for example, there are an automobile insurance with special agreement for personal injury, SAP, PAP, BAP, and the like.

In addition, as a type of special agreement, there are a special agreement for not covering certain ages, a special agreement for limiting insurance coverage to a family, a special agreement for children, and the like.

### (3) Communication factors

### 1. Solicitation message (what kind of message)

A low price, high compensation with a reasonable price, after care, and the like.

### 2. Medium (with which access medium)

Telephone, a direct mail, an electronic mail, a person, and the like.

### 3. When

· Automobile insurance purchase motivation forming time
   One month, two months, or three months before an expiration date of a present agreement, during business negotiation for purchase of a new car, and the like.
· Media accessible time of a customer
   Data of days of week, time slot, and the like.

### 4. Where

A home, a place of work, a pertinent automobile sales shop, and the like.

### (4) Strategy basic data

Performance indexes such as a strategy NPV, a reach rate, an effective conversation rate, a rate of agreement, and media cost per one reach, basic data such as an average estimated unit price by product, a sales strategy cost unit price, and an insurance sales agency fee for calculation of a performance index value.

Subsequently, automobile sales, service, accident car storage databases of each base of an automobile sales company and an automobile insurance sales support ASP are connected by a network to establish a data mart. Here, in the case in which a seller has a plurality of shops, sales achievements of respective bases are compared according to an index such as a contract rate or a continuation rate to calculate a best practice opportunity by each purpose of strategy. An estimated profit by strategy is calculated based upon a result of the calculation to determine a high priority purpose of strategy.

In addition, an expected rate of agreement and an estimated profit can be calculated by performing weighting for each customer segment according to a purpose of strategy.

For example, in a strategy for selling an automobile insurance to a customer who has taken out an automobile insurance policy but has not purchased an automobile insurance through the pertinent automobile sales company, a rate of agreement is low for a customer segment of customers who have entered into automobile insurance agreements with other agencies due to a reason such as relationship and is high for a customer segment of customers who have entered into automobile insurance agreements with other automobile sales shops and left the agreements as they are. This estimated rate of agreement is calculated using questionnaire investigation, focus interview, and data of the past.

In the case in which there is sales strategy data of the past, strategy data and a performance index achievement value of the past are inputted in a sales strategy frame consisting of purposes of strategies, value provision factors, and communication factors. As to the communication factors, access media to customers are arranged in time series and a plurality of accesses from a first access are registered. In the case in which the sales strategies in the past are implemented by the system in accordance with this embodiment, the strategy data and the performance index achievement value are automatically displayed on a table consisting of the purposes of strategies, the value provision factors, and the communication factors.

In order to calculate this estimated profit, the task improvement support system 1 has to store sales achievements of the past and performance index value factors and basic data for calculation of a budget value as the strategy basic data described above. An estimated value of a performance index such as an NPV is calculated from basic data such as average unit price of automobile insurance products, an insurance agency fee of an automobile sales company, a sales strategy cost (direct mail unit price, telephone unit price, personnel expense unit price, etc.) and an estimated value of a rate of agreement, a rate of message communication success, or a reach rate.

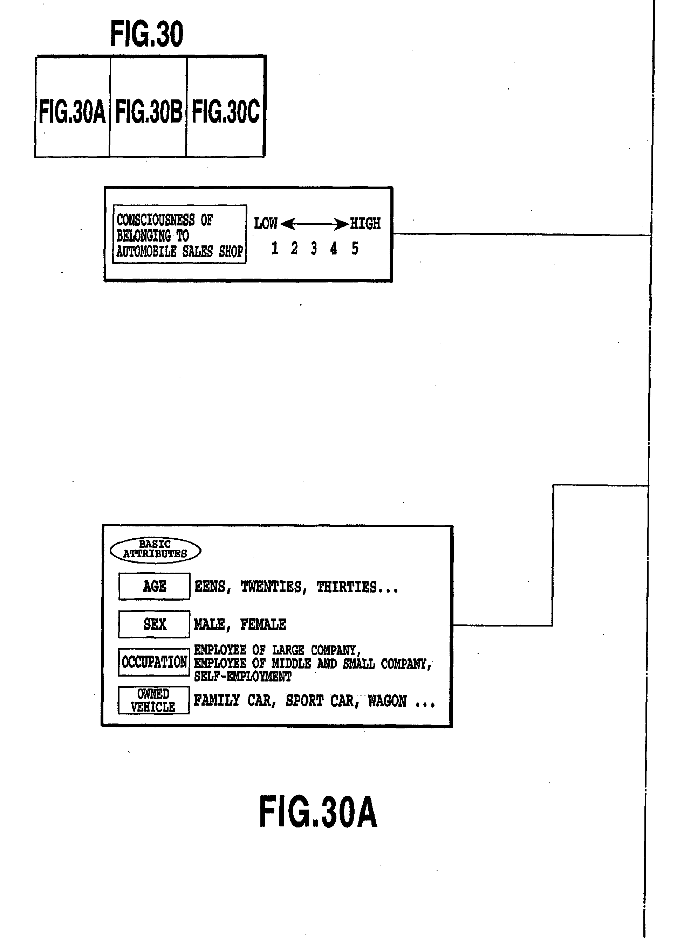

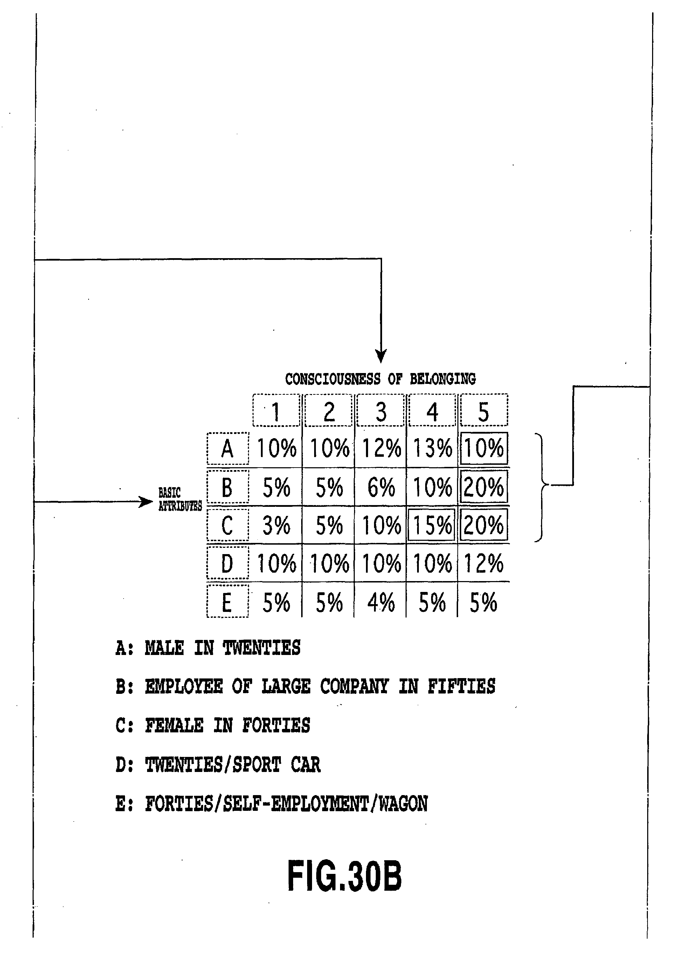

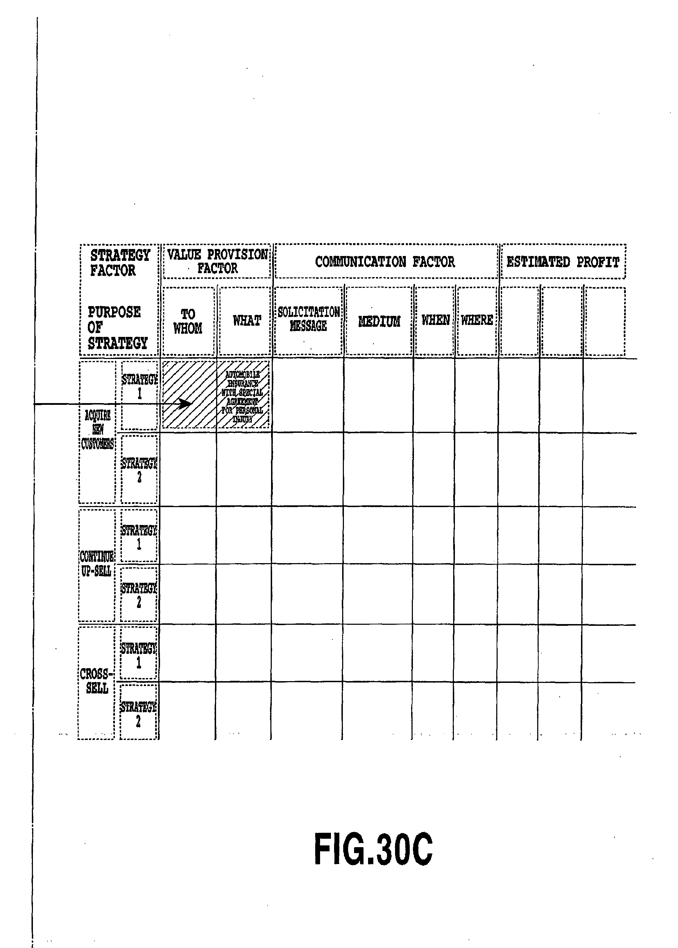

In addition, in the case in which sales strategy data of the past does not exist in a form conforming to the sales strategy frame, information on correlation analysis of a part of factors of the sales strategy frame is given. For example, a recommended product is proposed for each attribute segment of potential customers according to correlation analysis on who purchases what kind of product. That is, based upon a result that customers in their twenties have not taken out an automobile insurance policy with a special agreement for personal injury, an SAP or a BAP is recommended to them. Alternatively, as shown in FIGS. 30A to 30C, for customers using cars of certain types and customers in a high rank of degree of consciousness of belonging, an automobile insurance with a special agreement for personal injury is recommended to this customer segment based on an analysis that many of such customers would buy such an insurance.

In the case in which sales strategy data of the past does not exist or is insufficient, a sales strategy which a sales strategy formulator considers to be high in profit based upon the sales strategy formulator's own experience or a strategy on which the sales strategy formulator desires to perform test is determined by selecting factors of the sales strategy frame consisting of the purposes of strategies, the value provision factors, and the communication factors.

Subsequently, the strategy formulator determines a performance index. As a result, the task improvement support system 1 displays basic data necessary for calculation of a performance index estimated value, and the strategy formulator inputs an estimated value of the basic data from the strategy formulator client 105. An estimated value of basic data of strategies implemented in the past is automatically displayed. Consequently, a performance index estimated value is calculated by the task improvement support system 1.

The strategy formulator selects a desired strategy out of a strategy list displayed on the strategy formulator client 105. In response to the input, the task improvement support system 1 outputs a list of target customers of each strategy to the seller clients 3, 3' of a person in charge of automobile insurance sales of each base. In the case in which it is judged that implementation of the sales strategy is not preferable, the person in charge can operate the seller clients 3, 3' to have the specific customer excluded from targets of the sales strategy. For example, the person in charge implements exclusion of the customer from the targets of the sales strategy based upon information on a degree of expectation which is not accumulated in the task improvement support system 1 such as failure to sell an automobile insurance despite sales efforts recently.

Moreover, the person in charge determines a schedule (when) of implementation of the strategy taking into account restriction conditions of a capacity of an access medium included in the communication factors and a resource capacity of personnel or the like to be required.

In addition, the person in charge subjects the strategies and the performance achievements of the past to statistic processing as preparation of an executed result record of the sales strategy or defines a stage of execution of the sales strategy deeply relating to respective items of the value provision factors and the communication factors and a performance index for measuring a rate of passage of the stage based upon a law learnt by experience of the strategy formulator.

For example, in the case in which a sales strategy is defined as follows, a reach rate with respect to target customers is defined as a performance index having a deep relation with communication factors of a medium, when, and where, a message communication rate with respect to reach customers is defined as a performance index having a deep relation with a solicitation message, and agreement or a rate of shift to the next access of message communication successful customers is defined as a performance index having a deep relation with value provision factors.

Next, the defined contents are inputted in the task improvement support system.

An example of the sales strategy defined above will be described.

### (1) Purpose of a strategy

Sales of an automobile insurance to customers who have taken out an automobile insurance policy but have not purchased an automobile insurance through the pertinent automobile sales company.

### (2) Value provision factors

Customer segment (to whom): Owners of family cars in their forties
Product (what): All automobile insurances excluding a BAP and all special agreements for qualified people

### (3) Communication factors

### <First access>

Solicitation message (what kind of message): Low price
Medium (with which access medium): Telephone
When: Access potential customers within two months from dates of expiration of present agreements (customers for whom expiration dates are unclear are also targets) in the weekend
Where: Home

### <Second access>

Solicitation message (what kind of message): After care
Medium (with which access medium): Person in charge of automobile insurance sales
When: Access potential customers within two months from dates of expiration of present agreements (customers for whom expiration dates are unclear are also targets) from ten to sixteen o'clock on weekdays
Where: Home

### Step 2: Implementation of a strategy

In the case in which the access medium of the first access is telephone, a person in charge making a telephone call has a conversation with customers, who the person in charge could have reached, based upon the sales strategy in accordance with a script prepared in advance. Thereafter, the person in charge inputs contents of the telephone conversation, whether or not message communication was possible, and a degree of expectation of shift to the second access or agreement in the seller clients 3, 3'. The inputted data is accumulated in the task improvement support system via a network.

Information on customers with a high degree of expectation of shift to the second access or agreement is automatically communicated to the person in charge of automobile insurance sales from the seller clients 3, 3' from the task improvement support system 1 via the network 2. The person in charge of automobile insurance sales makes a phone call to potential customers based upon the information and makes appointments for date and time of visit.

As data indicating a sales strategy which should be taken at the time of visit, customer information and a way of sales are sent from the task improvement support system 1, and the person in charge performs sales of the automobile insurance with reference to the information. Thereafter, the person in charge inputs contents of the telephone conversation, whether or not message communication was possible, and a degree of expectation of shift to the third access or agreement in the seller clients 3, 3'.

The inputted data is accumulated in the task improvement support system 1 via a network. The shift to the third access is not recorded in this embodiment. However, customers with whom the sales strategy has resulted in agreement within a predetermined period after the start of the second access among the target customers are recorded as results of the sales strategy.

Sales support media which are handed to the target customers in forms of media of electronics, mail, and hand delivery and a script in the case in which a human is an access medium are arranged into a template reflecting results of sales strategies of the past. At the time of determination of a sales strategy, a fittest template is automatically selected. The person in charge asks customers predetermined questions during implementation of the sales strategy and reflects results of the questions on the template, whereby contents of the template can be customized. For example, the person in charge asks present conditions of agreement with other companies, and contents recommending an automobile insurance with special agreement for personal injury and vehicle are reflected on the template for customers with SAP agreements of sixteenth or higher grades.

Subsequently, a state of passage of the sales strategy through the first access and the second access, a state of agreement, and attribute information of those who has passed or has not passed each access are sent to seller clients of a strategy formulator, a person in charge of telephone in the first access and a person in charge of automobile insurance sales in the second access from the task improvement support system 1 everyday.

The strategy formulator performs revision of the scripts of the first access and the second access and a sales method based upon the information and gives an instruction to each person in charge of access through the task improvement support system 1. The person in charge of telephone in the first access and the person in charge of automobile insurance sales in the second access come up with ideas in their own strategies with reference to a list of achievement of the respective persons in charge and a comparison table of plans and results to be distributed from the task improvement support system 1.

As a result of the sales strategy, customers who have not passed each stage are automatically listed as targets to be approached again, and a next best sales strategy is automatically recommended by the task improvement support system 1.

### Step 3: Result analysis

Results of the sales strategy are displayed in the sales strategy frame consisting of purposes of strategies, value provision factors, and communication factors. The results to be displayed are the achievement values of the performance index in each stage recorded in step 2, profitability of the sales strategy, and the like.

Analysis of customer segments fitted to the strategy and customer segment not fitted to the strategy and analysis of factors therefor are performed according to attribute analysis of those who have passed and have not passed each stage, questionnaire investigation to be performed after taking the sales strategy.

A plurality of sales strategies implemented at the same time are collected in the same table and, with an identical customer segment as a key, contents of the other value provision factors and communication factors and performance index values are displayed.

An achievement value of a performance index of a sales strategy execution stage, which has a strong correlation with the respective task components of the value provision factors and the communication factors defined before executing the strategy, is calculated. That is, in this embodiment, the communication factor of an access medium, when, and where is a reach rate with respect to target customers, the solicitation message is a message communication rate with respect to reach customers, and the value provision factor is agreement of message communication successful customers or a rate of shift to the next access.

### Step 4: Regeneration of a high priority strategy list and accumulation of knowledge

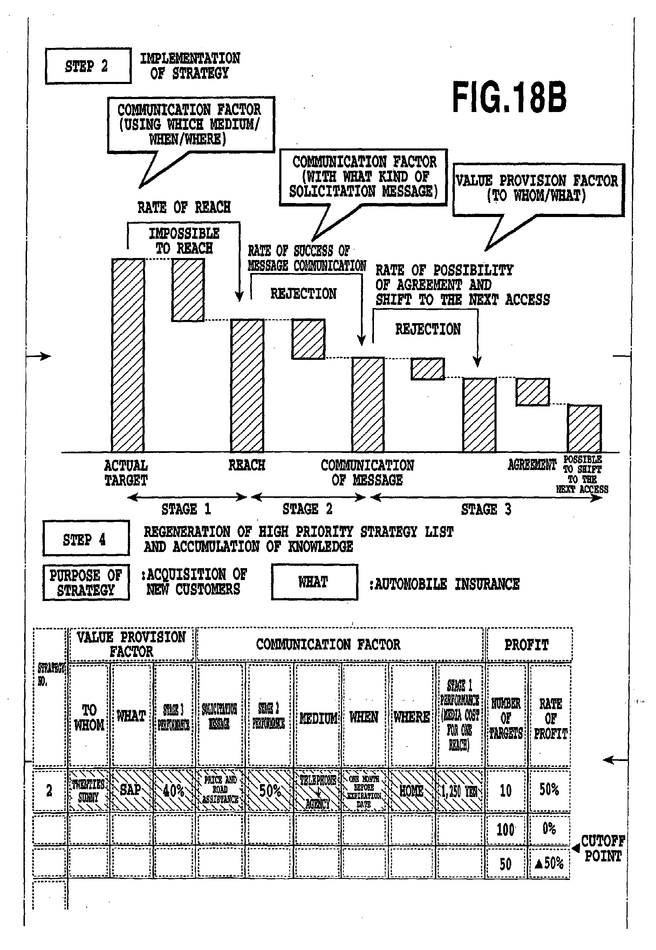

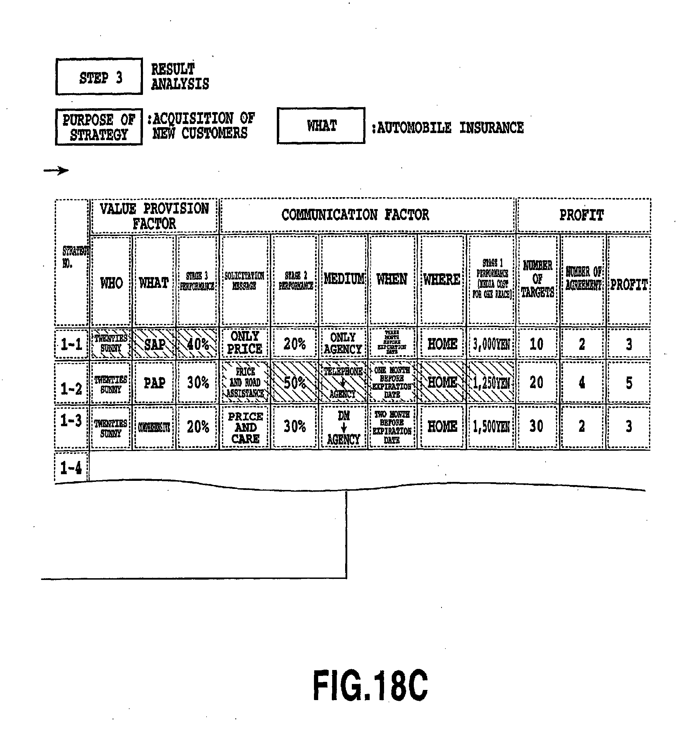

The data indicating implementation results of the sales strategy of this embodiment is accumulated as data of the past and is utilized as knowledge for design of the next and subsequent sales strategies. As shown in FIG. 18C (step 3) and FIG. 18B (step 4), a combination of factors of task components, with which performance index values of the stages 1, 2, and 3 are the highest, is considered with "to whom" or "what" as a key. Then, the factors are arranged in a descending order of profit performance index values and stored in the task improvement support system 1 as knowledge for the next and subsequent strategy formulation. The strategy frame consisting of value provision factors, communication factors, and purposes of strategies is prepared in advance in this way, whereby it becomes possible that achievements of sales strategies is managed in a common format and effectively utilized as a knowledge base. In addition, this strategy frame of value provision factors, communication factors, and purposes of strategies makes it possible to utilize personal data of a strategy formulator not accumulated in the task improvement support system and realizes a remarkable effect and learning speed compared with sales strategy formulation relying only on data and strategy formulation relying only on intuition of the strategy formulator.

Although the preferred embodiments of the present invention have been described above, it is needless to mention that the present invention is not limited to the above-mentioned forms but can be implemented in other various forms. For example, the term "task" used in the present invention is not limited to the above-mentioned embodiments. In addition, a customer in the above-mentioned embodiments is only an example of a target of a strategy, and the present invention can be applied to execution of strategies with respect to other various targets.

### Industrial Applicability

As described above in detail, according to the present invention, it becomes possible to improve performance index values of both quality and cost of a strategy remarkably as described below.

### <Improvement of quality>

· Even if there is no data stored in an information system at first, tacit knowledge held by individuals is utilized, whereby a cycle of formulation/execution of an appropriate strategy, result analysis, and feedback to the next strategy can be circulated scientifically, and performance of the strategy is improved.
· Strategy components become factors of data mining (correlation analysis), and the data mining can be implemented without a high degree of skill.
· A strategy is formulated according to selection of factors of task components, whereby strategy formulation, analysis, and the like become easy, and it becomes possible for an employee of a level of a person in charge of a task to independently circulate the cycle of strategy formulation/execution, result analysis, and feedback to the next strategy.
· The cycle of strategy formulation/execution, result analysis, and feedback to the next strategy is supported by an information system, whereby cost for circulating the cycle is reduced, time for information collection and analysis is shortened, the number of cycles which can be circulated in a predetermined period is increased remarkably, and a learning effect is improved.
· Since a plurality of strategy formulators and strategy executors change implementation results of colleagues selected at random all over the country into knowledge with specific information such as individual names hidden and share the knowledge instantly not through a hierarchy of an organization, contrivance can be made in formulating a new strategy and executing of the strategy.
· According to definitions of a strategy component and a performance index, a strategy expected to have a higher effect can be automatically generated to navigate (instruct) a strategy executor without the strategy executor retrieving knowledge.
· By providing a knowledge database in an external integrated center, knowledge of other companies and channels without a capital relation can be put together without requesting disclosure of information peculiar to companies.

### <Reduction of cost>

· Cost on information collection, analysis, and discussion necessary for formulation of a strategy can be reduced, and time therefor can be shortened. As a result, frequency and quality of strategy formulation or the like can be increased.
· In addition, cost on information collection for confirming an execution state of a strategy, confirmation of progress, and provision of an advice can be reduced, and time therefor can be shortened. As a result, frequency and quality of the advice can be increased.
· In addition, by standardization and automation of result analysis, cost on the result analysis can be reduced, and time therefor can be shortened. As a result, frequency and quality of the result analysis can be increased.
· Further, based upon execution results of strategies in the past, cost and time required for information collection, analysis, and discussion for examining a strategy with higher performance can be reduced. As a result, frequency and quality of examining the strategy with higher performance can be increased.

## Claims

1. A task improvement support system for supporting task improvement based upon execution of a strategy for a task,
**characterized by** comprising:
component storage means having stored therein a plurality of components constituting the task and options which the respective components can take;
input means for inputting a plurality of strategies consisting of combinations of the options stored in said component storage means;
acceptance means for accepting selection of at least one of the strategies inputted by said input means;
actual measured value receiving means for receiving an actual measured value of a performance index indicating performance for the strategy for which selection is accepted by said acceptance means; and
performance index calculation means for finding the performance index for the respective strategies inputted by said input means using the actual measured value of the performance index received by said actual measured value receiving means.

2. The task improvement support system according to claim 1, **characterized by** further comprising:
list preparation means for preparing a list, in which the strategies inputted by said input means are arranged, in accordance with the performance index found by said performance index calculation means ; and
list transmission means for sending the list prepared by said list preparation means.

3. The task improvement support system according to claim 1, **characterized by** further comprising determination means for determining a strategy, for which execution should be recommended, among the strategies inputted by the input means based upon the performance index found by said performance index calculation means.

4. The task improvement support system according to claim 3,
**characterized in that** the strategy for which execution should be recommended can be a strategy for which the performance index found by the performance index calculation means exceeds a predetermined threshold value.

5. The task improvement support system according to claim 1, **characterized by** further comprising strategy preparation means for combining the options stored in said component storage means to prepare a new strategy, for which execution should be recommended, based upon the actual measured value of the performance index received by said actual measured value receiving means, and in that said performance index calculation means further finds a performance index of the strategy prepared by said strategy preparation means.

6. The task improvement support system according to claim 5, **characterized by** further comprising knowledge collection means for collecting knowledge indicating a relation between the strategy and the performance index from the outside, and in that the performance index calculation means finds the performance index further using the knowledge collected by said knowledge collection means.

7. The task improvement support system according to claim 5.
**characterized in that** the strategy for which execution should be recommended is a strategy for which the performance index exceeds a predetermined threshold value.

8. The task improvement support system according to claim 5,
**characterized in that** said strategy preparation means finds the strategy for which execution should be recommended according to statistic analysis with the performance index as an explained variable and the options of the component as an explanatory variable.

9. The task improvement support system according to claim 5,
**characterized in that** said acceptance means comprises:
strategy transmission means for sending the strategy inputted by said input means, the strategy prepared by said strategy preparation means, and the performance index found by said performance index calculation means to an outside information processing apparatus; and
strategy acceptance means for accepting selection of at least one strategy which should be executed by the executor of the strategy out of the strategies sent by said strategy transmission means.

10. The task improvement support system according to claim 5, **characterized by** further comprising change acceptance means for accepting change of the options constituting the strategy prepared by said strategy preparation means, and in that said performance index calculation means further finds a performance index of a strategy consisting of the options for which change is accepted by said change acceptance means.

11. The task improvement support system according to claim 1, **characterized by** further comprising knowledge collection means for collecting knowledge indicating a relation between the strategy and the performance index from the outside, and in that said performance index calculation means finds the performance index using the knowledge collected by the knowledge collection means.

12. The task improvement support system according to claim 1, **characterized by** further comprising actual measured value transmission means for sending an actual measured value of the performance index of the strategy received by said actual measured value receiving means in response to a request received from the outside.

13. The task improvement support system according to claim 1, **characterized by** further comprising:
strategy target information storage means in which information on targets for whom the strategy should be executed is stored; and
means for sending the information on the targets stored in said strategy target information storage means and accepting designation of a target for whom the strategy should be executed out of the sent targets.

14. The task improvement support system according to claim 1, **characterized in that** said acceptance means comprises:
strategy transmission means for sending the strategy inputted by said input means to an outside information processing apparatus; and
strategy acceptance means for accepting selection of at least one strategy which the executor of the strategy should execute out of the strategies sent by said strategy transmission means.

15. The task improvement support system according to claim 1, **characterized in that** the task includes any one of a sales task, a purchase task, a manufacturing task, research and development, an indirect task, general affairs, an employment task, an education task, and an investment task.

16. The task improvement support system according to claim 1, **characterized in that** the task is the sales task, and the component includes a component indicating to whom a product is sold, what kind of product is sold, and how a product is sold.

17. An information processing apparatus for performing communication with said task improvement support system according to claim 9 through a network, comprising:
means for receiving strategies sent by said strategy transmission means;
means for selecting at least one strategy which should be executed by a strategy executor out of strategies included in the strategies received by said receiving means; and
means for sending the strategy selected by said selecting means to said strategy acceptance means.

18. The information processing apparatus according to claim 17, **characterized by** further comprising means for sending an actual measured value of a performance index of the strategy selected by said selecting means to said task support system.

19. A task improvement support method using a system for supporting task improvement based upon execution of a strategy for a task, comprising:
storing a plurality of components constituting the task and options which the respective components can take in component storage means;
inputting a plurality of strategies consisting of combinations of the options stored in said component storage means;
accepting selection of at least one of the inputted strategies;
receiving an actual measured value of a performance index indicating performance for the strategy for which selection is accepted; and
finding the performance index for the inputted strategies based upon the received actual measured value of the performance index.

20. The task improvement support method according to claim 19, **characterized by** comprising:
preparing a list, in which the inputted strategies are arranged, in accordance with the found performance index; and
sending the prepared list.

21. The task improvement support method according to claim 19, **characterized by** further comprising determining a strategy for which execution should be recommended out of the inputted strategies based upon the found performance index.

22. The task improvement support method according to claim 21, **characterized in that** the strategy for which execution should be recommended can be a strategy for which the found performance index exceeds a predetermined threshold value.

23. The task improvement support method according to claim 19, **characterized by** further comprising combining the options stored in said component storage means to prepare a new strategy, for which execution should be recommended, based upon the received actual measured value of the performance index, and find a performance index of the prepared strategy.

24. The task improvement support method according to claim 23, **characterized by** further comprising collecting knowledge indicating a relation between the strategy and the performance index from the outside to find the performance index using the collected knowledge.

25. The task improvement support method according to claim 23, **characterized in that** the strategy for which execution should be recommended can be a strategy for which the performance index exceeds a predetermined threshold value.

26. The task improvement support method according to claim 23, **characterized by**, in preparing the strategy, preparing the strategy for which execution should be recommended according to statistic analysis with the performance index as an explained variable and the options of the component as an explanatory variable.

27. The task improvement support method according to claim 23, **characterized in that**, in accepting selection of the strategy, the task improvement support system sends the inputted strategy and the prepared strategy to an outside information processing apparatus and accepts selection of at least one strategy which should be executed by the executor of the strategy out of the sent strategies.

28. The task improvement support method according to claim 23, **characterized by** further comprising accepting change of the options constituting the prepared strategy to find a performance index of a strategy consisting of the options for which change is accepted.

29. The task improvement support method according to claim 19, **characterized by** further comprising collecting knowledge indicating a relation between the strategy and the performance index from the outside to find the performance index using the collected knowledge.

30. The task improvement support system according to claim 19, **characterized by** further comprising sending an actual measured value of the performance index of the received strategy in response to a request received from the outside.

31. The task improvement support method according to claim 19, **characterized by** further comprising: sending the information on the targets for whom the strategy should be executed stored in said strategy target information storage means; and accepting designation of a target for whom the strategy should be executed out of the sent targets.

32. The task improvement support method according to claim 19, **characterized by**, in accepting selection of the strategy, sending the inputted strategy to an outside information processing apparatus and accepting selection of at least one strategy which the executor of the strategy should execute out of the sent strategies.

33. The task improvement support method according to claim 19, **characterized in that** the task includes any one of a sales task, a purchase task, a manufacturing task, research and development, an indirect task, general affairs, an employment task, an education task, and an investment task.

34. The task improvement support method according to claim 19, **characterized in that** the task is the sales task, and the component includes a component indicating to whom a product is sold, what kind of product is sold, and how a product is sold.

35. The task improvement support method according to claim 32, **characterized in that** the sent strategies are received in an information processing apparatus for performing communication with said task improvement support system through a network, at least one strategy which should be executed by a strategy executor is selected out of strategies included in the received strategies in said information processing apparatus, and the selected strategy is sent to said task improvement support system in said information processing apparatus.

36. The task improvement support method according to claim 35, **characterized by** further comprising sending an actual measured value of a performance index of the selected strategy from said information processing apparatus to said task improvement support system.

37. A computer readable recording medium, **characterized by** having recorded therein a computer program supporting task improvement based upon execution of a strategy for a task, the computer program causing the computer to execute:
a step of storing a plurality of components constituting the task and options which the respective components can take in component storage means;
a step of inputting a plurality of strategies consisting of combinations of the options stored in said component storage means;
a step of accepting selection of at least one of the inputted strategies;
a step of receiving an actual measured value of a performance index indicating performance for the strategy for which selection is accepted; and
a step of finding the performance index for the inputted strategy based upon the received actual measured value of the performance index.
